(19) Europäisches Patentamt
European Patent Office
Office européen des brevets

(11) **EP 2 671 010 B1**

(12) **FASCICULE DE BREVET EUROPEEN**

(45) Date de publication et mention
de la délivrance du brevet:
**04.11.2015 Bulletin 2015/45**

(21) Numéro de dépôt: **12705354.4**

(22) Date de dépôt: **23.01.2012**

(51) Int Cl.:
*F16L 3/015* (2006.01)    *E21B 17/01* (2006.01)

(86) Numéro de dépôt international:
**PCT/FR2012/050137**

(87) Numéro de publication internationale:
**WO 2012/104518 (09.08.2012 Gazette 2012/32)**

(54) **LIMITEUR DE COURBURE DE LIGNE FLEXIBLE SOUS-MARINE ET INSTALLATION DE LIAISON FOND-SURFACE EN COMPRENANT**

KRÜMMUNGSBEGRENZER FÜR EINE FLEXIBLE UNTERWASSERLEITUNG UND VORRICHTUNG ZUR HERSTELLUNG EINER VERBINDUNG ZWISCHEN MEERESGRUND UND WASSEROBERFLÄCHE DAMIT

CURVATURE LIMITER FOR A FLEXIBLE UNDERSEA LINE, AND SEABED-TO-SURFACE LINKING EQUIPMENT INCLUDING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2011 FR 1150849**

(43) Date de publication de la demande:
**11.12.2013 Bulletin 2013/50**

(73) Titulaire: **Saipem SA**
**78180 Montigny-le-Bretonneux (FR)**

(72) Inventeurs:
• **PIONETTI, François Régis**
**50450 La Baleine (FR)**
• **ROCHER, Xavier**
**78400 Chatou (FR)**

(74) Mandataire: **Domange, Maxime**
**Cabinet Beau de Lomenie**
**232 Avenue du Prado**
**13008 Marseille (FR)**

(56) Documents cités:
WO-A1-2005/078325    FR-A1- 2 889 557
GB-A- 2 334 048    JP-A- 2009 060 731
US-A- 3 420 331    US-A1- 2010 228 295

## Description

La présente invention concerne un dispositif limiteur de courbure formant un organe tubulaire apte à adopter une position rectiligne ou une courbure variable en interdisant un rayon de courbure inférieur à un rayon de courbure minimal donné $R_0$ et ainsi autoriser une courbure variable contrôlée ou l'absence de courbure d'une ligne flexible enfilée à l'intérieure dudit organe tubulaire.

La présente invention concerne également une installation de liaison fond-surface entre (a) un équipement sous-marin, tel qu'une tête de puits sous-marine ou l'extrémité d'une conduite sous-marine reposant au fond de la mer et (b) un support flottant en surface, comprenant une ligne flexible sous-marine dont la courbure est contrôlée localement par un limiteur de courbure.

Plus particulièrement, la présente invention concerne une installation comprenant une tour hybride constituée d'une conduite flexible reliée à une conduite rigide montante ou riser vertical, dont l'extrémité inférieure est reliée à l'extrémité supérieure d'un dit équipement ou une dite extrémité de conduite sous-marine reposant au fond de la mer, ladite tour étant couplée à au moins une dite ligne flexible passant à travers un limiteur de courbure accroché à ladite colonne montante et/ou en suspension accroché à un flotteur en subsurface.

On entend ici par ligne flexible sous-marine une ligne facile à courber pour obtenir un rayon minimum de courbure de quelques mètres notamment de 0.5 à 5 m tout en restant dans le domaine élastique, par opposition à une conduite rigide en acier dont la paroi est massive et dont le rayon de courbure dans le domaine élastique est de plusieurs dizaines voire centaines de mètres. De telles lignes flexibles sont par exemple :

a) une conduite flexible de transfert de fluide pétrolier telle que celles fabriquées par la société COFLEXIP (France) utilisées notamment dans les tours hybrides mentionnées ci-dessus, et classiquement constituées d'un tube interne de matériau polymère flexible renforcé par des armatures de fils métalliques ou composites tressés, formant des gaines spiralées, et le cas échéant une pluralité de tubes intermédiaires ou extérieur entre lesdites armatures,

b) des câbles ou conduites de transfert d'énergie ou d'informations telles que des câbles électriques, des câbles de contrôle ou des conduites de transfert de fluide hydraulique alimentant des équipements hydrauliques telles que des vérins ou des conduites contenant des fibres optiques, ou encore

c) des ombilicaux, c'est-à-dire des conduites comportant une pluralité de telles câbles électriques, conduites hydrauliques, câbles de contrôle et/ou fibres optiques.

Le secteur technique de l'invention est plus particulièrement le domaine de la fabrication et de l'installation de colonnes montantes (« riser ») de production pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention étant dans le domaine de la production pétrolière.

Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" {signifiant "moyen flottant de stockage, de production et de déchargement") dont on utilise le terme abrégé "FPSO" dans l'ensemble de la description suivante.

On connaît des liaisons fond-surface d'une conduite sous-marine reposant au fond de la mer, liaison du type tour-hybride comprenant :

- un riser en acier sensiblement vertical dont l'extrémité inférieure est ancrée au fond de la mer et reliée à une dite conduite reposant au fond de la mer, et

- une conduite de liaison, en général une conduite de liaison flexible, en continuité de courbure en chaînette plongeante, entre l'extrémité supérieure dudit riser et un support flottant en surface, ladite conduite de liaison flexible pouvant comprendre sur une partie de sa longueur des éléments de flottabilité. On entend ici par « chaînette plongeante » une courbure en forme géométrique dite de chaînette avec un point bas d'inflexion.

Ce type de liaison est plus particulièrement décrit dans le brevet WO-2009-138609. Dans le brevet WO-00/49267 de la demanderesse, on décrit une variante de tour hybride comportant une pluralité de conduites rigides verticales solidarisées entre elles à divers niveaux.

Des liaisons flexibles fond-surface complémentaires de type câble électrique ou ombilical électro-hydraulique sont rajoutées après installation de la tour hybride, lesdites liaisons fond-surface complémentaires étant en général continues depuis le FPSO, jusqu'à leur destination, c'est à dire par exemple une tête de puits sous-marine située à plusieurs kilomètres de distance dudit FPSO.

On rappelle à ce propos, que la fonction essentielle de ces portions de chaînettes plongeantes de lignes flexibles est d'absorber, au moins en partie, les mouvements des conduites rigides auxquelles ladite ligne est fixée ou accrochée et/ou les mouvements des supports flottants auxquels ladite ligne flexible est reliée, en découplant mécaniquement les mouvements respectifs desdites conduites rigides et desdits supports flottants. Mais une autre fonction est aussi de réduire les efforts de traction exercés par la ligne flexible, sur l'équipement sous-marin au fond de la mer auquel elle est reliée, le cas échéant.

On connaît dans FR 09 58096 au nom de la demanderesse, déposée le 17 novembre 2009, des installations fond-surface, dans lesquelles une pluralité de lignes flexibles comprend des portions de lignes en forme de courbe de chaînette plongeante, obtenues en suspendant à une bouée une portion de ladite ligne flexible à une hauteur intermédiaire entre le fond et la surface. Pour ce faire, on fait passer ladite portion intermédiaire de ligne ou conduite flexible par une goulotte définissant une surface rigide d'appui de forme courbe convexe.

Une telle goulotte permet de conférer à la portion de conduite flexible qu'elle soutient une courbure contrôlée pour éviter une courbure excessive qui dégraderait irrémédiablement ladite conduite. Mais, la pose de ces goulottes d'une part et des conduites flexibles par-dessus ces goulottes d'autre part demande des manoeuvres compliquées et longues et donc coûteuses.

Dans FR 2 889 557, on proprose la mise en oeuvre d'un dispositif limiteur de courbure, constitué d'un organe tubulaire dans lequel est enfilée la conduite, lequel est susceptible d'être préinstallé autour de la conduite soit en usine, soit à bord d'un navire de pose. Le dispositif limiteur de courbure est posé avec la conduite enfilée dans ledit dispositif limiteur de courbure, celui-ci présentant alors une forme rectiligne dont les dimensions de diamètre externe sont compatibles avec les dimensions des trappes de passage de la conduite au niveau du navire de pose, notamment à la base des tours de pose en J, à l'aide desquelles on déroule et dépose les conduites en mer depuis le navire de pose. Ainsi, il suffit ensuite de suspendre ou d'accrocher le limiteur de courbure à une hauteur intermédiaire entre le fond et la surface, puis de lui donner une forme courbe avec une forme convexe tournée vers le haut, de manière à créer sur au moins un de ses côté une portion de conduite ou ligne flexible en forme de chaînettes plongeantes. Cet organe tubulaire flexible constituant ledit limiteur de courbure décrit dans FR 2 889 557, comprend une pluralité de manchons tubulaires disposés bout à bout dans une direction longitudinale axiale et reliés entre eux de façon lâche par des organes annulaires. Lesdits manchons et dits organes annulaires présentent des extrémités longitudinales non cylindriques s'emboîtant les unes dans les autres sans être fixées les unes aux autres. Plus précisément, les manchons présentent à chaque extrémité des collerettes recourbées radialement vers l'extérieur formant un épaulement tandis que les organe annulaires présentent à chacune de leurs extrémités un recourbement radial vers l'intérieur formant des épaulements en sens inverse aptes à coopérer en emboîtement avec les épaulements aux extrémités desdits manchons.

Les manchons et organes annulaires ainsi emboîtés les uns dans les autres successivement constituent un montage articulé autorisant des débattements entre les différents éléments, aussi bien dans les directions longitudinales axiales des manchons que dans les directions latérales perpendiculaires aux dites directions longitudinales axiales. Et, ce débattement autorise une courbure de l'organe tubulaire, ladite courbure étant limitée de par le débattement maximale autorisé sur une face supérieure desdits manchons et organes annulaires, lorsque leur face inférieure est en débattement minimal.

Ce type de limiteur de courbure autorise donc une courbure variable de la ligne ou conduite flexible, y compris une position rectiligne, en interdisant la courbure de ladite ligne flexible en dessous d'un rayon de courbure minimal déterminé.

De tels dispositifs de courbure de type à vertèbres emboîtées tels que décrits dans les brevets FR 2 889 557 et US 2010/0228295 sont connus de longue date et ont été développés et utilisés pour la première fois sur le site de Chevron-Ninian en Mer du Nord en 1978.

GB 2 334 048 décrit également un restricteur de courbure pour conduite flexible de type à demi vertèbres emboîtées et alternées.

Ce type de limiteur de courbure présente certains inconvénients. Tout d'abord, ils sont délicats et coûteux à fabriquer, car ils requièrent la mise en oeuvre d'un emboîtement de pièces fabriquées au tour avec relativement grande précision, et donc des pièces relativement coûteuses à fabriquer. De même, l'assemblage des différents manchons et organes annulaires est relativement délicat et complexe à réaliser.

D'autre part, ce dispositif limiteur de courbure ne fournit pas une courbure stable et précise, du fait que sa stabilité est uniquement liée à son poids propre. En outre, ce dispositif limiteur de courbure peut être déformé, notamment si on tire latéralement dans une direction perpendiculaire au plan moyen de courbure du fait que les différents éléments unitaires emboîtés les uns dans les autres sont indépendants les uns des autres et peuvent connaître des débattements latéraux les uns par rapport aux autres, ce qui constitue un inconvénient, notamment lorsque l'on souhaite mettre en oeuvre une pluralité de lignes flexibles et donc une pluralité de limiteurs de courbure côte à côte à proximité, notamment disposés sur les deux faces opposées d'un flotteur ou d'une conduite rigide comme décrit dans FR 09 58096.

Un autre inconvénient du dispositif de limiteur de courbure décrit dans FR 2 889 557 tient en ce qu'il induit une limitation de la courbure de la ligne flexible dans toutes les directions, ce qui peut dans certains cas gêner, voire interdire, l'enroulement de la ligne flexible équipée dudit dispositif de limiteur de courbure autour d'une bobine de stockage à bord d'un navire de pose.

Un autre inconvénient du dispositif de limiteur de courbure décrit dans FR 2 889 557 est que la conduite est enserrée à l'intérieur des manchons pour maintenir une position relative fixe du limiteur de courbure par rapport à la conduite, ce qui requiert d'installer ledit dispositif limiteur de courbure autour d'un élément unitaire de conduite uniquement après avoir fait défiler et poser une portion de conduite de longueur correspondante en fonction de la hauteur à laquelle ledit dispositif limiteur de courbure doit être accroché ou suspendu entre le fond et la surface.

WO 2005/078325 décrit un dispositif selon le préambule de la revendication 1.

Le but de la présente invention est donc de fournir un nouveau type de dispositif de limiteur de courbure plus simple à réaliser, plus fiable en termes de précision et de stabilité de la forme courbe recherchée, notamment sans débattement latéral autorisé entre les différents composants du dispositif lorsqu'il est mis en oeuvre en configuration de courbure contrôlée.

Un autre but de la présente invention est de fournir un nouveau dispositif limiteur de courbure qui offre en outre la possibilité d'être mis en oeuvre dans une configuration fournissant un contrôle de la courbure par une limitation de la courbure, mais aussi une configuration dans laquelle le dispositif n'a aucun effet de limitation de courbure, ladite ligne flexible équipée dudit limiteur de courbure pouvant être alors courbée au-delà de la courbure limite maximale autorisée dans la configuration précédente.

Plus généralement, le but de la présente invention est de fournir un dispositif limiteur de courbure amélioré plus simple à réaliser mais aussi plus simple à mettre en oeuvre notamment en ce qui concerne son accrochage à une position intermédiaire entre le fond et la surface.

Pour ce faire, la présente invention fournit un dispositif limiteur de courbure formant un organe tubulaire apte à adopter une position rectiligne ou une courbure variable en interdisant un rayon de courbure inférieur à un rayon de courbure minimal donné et ainsi autoriser une courbure variable contrôlée ou l'absence de courbure d'une ligne flexible enfilée à l'intérieure dudit organe tubulaire, ledit organe tubulaire comprenant une pluralité de manchons tubulaires disposés bout à bout à leurs extrémités longitudinales, de préférence au moins 3 manchons, de préférence encore de 3 à 9 manchons, caractérisé en ce que lesdits manchons sont fixés les uns aux autres par des dispositifs de fixation et articulation en rotation disposés sur la face supérieure de chacun desdits manchons, au niveau de leurs extrémités longitudinales, lesdits dispositifs de fixation et articulation en rotation autorisant une rotation de l'axe longitudinale XX', $X_1X_1$' d'un premier manchon par rapport à l'axé longitudinale XX', $X_2X_2$' d'un deuxième manchon fixé au dit premier manchon par l'intermédiaire dudit dispositif de fixation et articulation, ladite rotation se faisant autour d'un axe de rotation YY', $Y_1Y_1$', $Y_2Y_2$' perpendiculaire aux deux dits axes longitudinaux XX', $X_1X_1$', $X_2X_2$' desdits premier et deuxième manchons, lesdits dispositifs de fixation et articulation n'autorisant aucun débattement longitudinal ou latéral des différents manchons les uns par rapport aux autres, de préférence les deux axes de rotation $Y_1Y_1$', $Y_2Y_2$' des deux dispositifs de fixation et articulation disposés aux deux extrémités longitudinales opposées de chaque manchon étant disposés à une même distance $L_2$ de l'axe longitudinale XX', $X_1X_1$', $X_2X_2$' du dit manchon, lesdits manchons comprenant en outre à leurs deux extrémités longitudinales respectivement deux butées de forme complémentaire, disposées contre les faces inférieures desdits manchons en positions sensiblement diamétralement opposées par rapport aux dits dispositifs de fixation et articulation, les deux faces frontales d'extrémité des deux butées aux extrémités longitudinales en vis-à-vis desdits premier et deuxième manchons étant espacées l'une de l'autre lorsque ledit organe tubulaire est en position rectiligne, et présentant une surface commune de contact lorsque les deux dites butées sont en contact l'une avec l'autre de par la rotation maximale autorisée des deux faces inférieures des deux dits manchons l'une vers l'autre grâce aux dits dispositifs de fixation et articulation.

On comprend que :

- ledit dispositif de fixation et articulation est tel que le pivotement vers le bas des deux manchons par rapprochement de leurs faces inférieures l'une de l'autre est limité par le contact entre leurs deux butées, tandis que, en revanche, le pivotement vers le haut des deux manchons par rapprochement de leurs faces supérieures ne serait limité, le cas échéant, que par le contact des extrémités longitudinales de leurs faces supérieures, si celles-ci n'étaient pas elles-mêmes fixées à un autre manchon juxtaposé ; et

- lesdites butées ont pour fonction de stabiliser et fiabiliser en termes de tenue mécanique dans le temps et sous l'effort la position incurvée du dispositif limiteur de courbure en dite rotation maximale autorisée ;

- l'inclinaison maximale autorisée $\alpha$ entre les deux axes longitudinaux $X_1X_1$', $X_2X_2$' des deux manchons successifs par rapprochement de leurs faces inférieures dépend de la distance $L_3$ entre lesdites butées respectives en vis-à-vis lorsque ledit organe tubulaire est en position rectiligne ; et

- la fixation les uns aux autres des manchons disposés bout à bout par lesdits dispositifs de fixation et articulation n'autorise aucun débattement longitudinal ou latéral des différents manchons les uns par rapport aux autres, excepté le jeu naturel des pièces mécaniques fixées les unes aux autres comme il sera explicité ci-après.

On comprend que lesdits manchons comprennent à chacune de leurs deux extrémités longitudinales un dit dispositif de fixation et articulation, excepté en ce qui concerne les extrémités longitudinales des deux manchons terminaux correspondant aux deux extrémités longitudinales dudit organe tubulaire.

Le dispositif limiteur de courbure ainsi défini est avantageux en ce qu'il permet de réaliser une dite courbure de façon plus précise et stable.

Un autre avantage du dispositif limiteur de courbure selon la présente invention tient en ce qu'il peut être courbé, avec une limitation de courbure, par rapprochement des faces inférieures du manchon, comme décrit ci-dessus, mais aussi autoriser une courbure inversée par rapprochement des faces supérieures des manchons et, ce, sans limitation de courbure ou avec un plus petit rayon de courbure. Cette possibilité de courbure inversée est, plus particulièrement, avantageuse en ce qu'elle permet, d'une part, la mise en oeuvre d'une ligne flexible équipée dudit limiteur du courbure enroulé sur une bobine de stockage, notamment à bord d'un navire de pose, et, d'autre part, facilite la dépose en mer d'une dite ligne flexible équipée dudit limiteur de courbure et l'accrochage dudit limiteur de courbure à une bouée ou conduite rigide sous-marine verticale, à une hauteur intermédiaire entre le fond et la surface, comme il sera explicité ci-après.

Un autre avantage du dispositif selon l'invention tient en ce qu'il peut être fabriqué plus simplement, notamment par mécano-soudage desdits dispositifs de fixation et articulation et desdites butées contre les faces supérieure et respectivement inférieure desdits manchons.

On comprend que lorsque les axes de rotation YY', $Y_1Y_1$', $Y_2Y_2$' des deux dispositifs de fixation et articulation disposés sur les faces supérieures des deux extrémités longitudinales opposées de chaque manchon sont espacés l'un de l'autre d'une même longueur $L_1$ pour tous les manchons dont les axes de rotation YY', $Y_1Y_1$', $Y_2Y_2$' desdits dispositifs de fixation et articulation sont à une même distance $L_2$ desdits axes longitudinaux XX', $X_1X_1$', $X_2X_2$' des manchons respectifs, lesdits angles de rotation maximale $\alpha$ résultant du contact des deux dites butées des faces inférieures deux à deux, sont tous identiques, et ledit dispositif limiteur de courbure autorise un rayon de courbure circulaire minimale $R_0$ de ladite ligne flexible à l'intérieur du limiteur de courbure, tel que :

$$R_0 = \left(\frac{L_1}{2}\right) \times cotg\left(\frac{\alpha}{2}\right) - L_2$$

De préférence encore, les différents manchons sont tous de même forme, même longueur et mêmes diamètres interne et externe.

En pratique, ledit angle de rotation maximal autorisé $\alpha$ par rapprochement des faces inférieures des deux manchons fixés l'un à l'autre grâce au dit dispositif de fixation et articulation est de 5 à 45°, de préférence n x $\alpha$ étant d'au moins 60°, de préférence de 60 à 150° lorsque ledit organe tubulaire comprend n dits dispositifs de fixation et articulation avec n étant de préférence un nombre entier de 3 à 21 de préférence encore de 5 à 15 et L1 = 15cm à 1m, L2 = 5cm à 50cm et $R_0$ = 0.5m à 5 m.

Pour des raisons de facilité de fabrication et d'usinage, dans un mode particulier de réalisation, ladite surface de contact desdites butées comprend.au moins un plan.

Dans un mode préféré de réalisation, lesdites faces frontales de deux butées comprennent des surfaces tridimensionnelles de formes complémentaires, respectivement concave et convexe, de sorte que ladite surface de contact présente une forme tridimensionnelle empêchant tout mouvement latéral des deux dits premier et deuxième manchons, l'un par rapport à l'autre, dans une direction perpendiculaire à l'un desdits axes longitudinaux $X_1X_1$', $X_2X_2$' desdits premier et deuxième manchons, et ayant un effet de centrage des axes longitudinaux $X_1X$', $X_2X$' desdits premier et deuxième manchons sensiblement selon un même plan longitudinal axial radial $P_0$ lorsque les deux dites butées rentrent en contact l'une avec l'autre.

Ce mode de réalisation est particulièrement avantageux car il permet de mettre en oeuvre des dispositifs de fixation et articulation, autorisant un certain jeu dans une direction latérale, selon la direction dudit axe de rotation YY'. Ceci permet donc d'éviter de mettre en oeuvre une mécanique de précision pour réaliser la coopération en rotation des différentes pièces au niveau du dispositif de fixation et articulation. Ce recentrage permet, également, d'éviter des déformations et/ou usures desdits dispositifs de fixation et articulation. Enfin, ce recentrage permet de garantir une plus grande stabilité de la forme du dispositif limiteur de courbure, notamment au regard des éventuels débattements latéraux. La conduite flexible se trouve alors en sécurité, de la même manière que sur une goulotte en structure mécano-soudée de l'art antérieur.

Dans un premier mode de réalisation, la butée inférieure à une extrémité du premier manchon présente une forme convexe ou concave complémentaire de la forme concave ou respectivement convexe de la butée en vis-à-vis à l'extrémité du deuxième manchon, chaque manchon présentant donc deux butées de formes différentes convexe et respectivement concave à ses deux extrémités longitudinales.

Dans un deuxième mode de réalisation, un premier manchon comporte deux butées de même forme convexe ou concave à chacune de ses deux extrémités longitudinales, ledit premier manchon étant fixé à chaque extrémité à un deuxième manchon, présentant des butées de même forme concave ou respectivement convexe.

Plus particulièrement, ladite surface de contact est formée de deux plans disposés en dièdre, ayant une arête commune, ladite arête étant disposée de préférence en alignement avec une droite $D_0$ en intersection avec ledit axe de rotation YY', $Y_1Y_1$', $Y_2Y_2$' du dit dispositif de fixation et articulation correspondant. On comprend que lesdites arêtes des deux butées se retrouvent ainsi sensiblement dans un même dit plan axial longitudinal P0, lorsque lesdites butées rentrent en contact l'une avec l'autre, et l'ensemble des éléments du dispositif se trouvent verrouillés sensiblement dans un même plan axial longitudinal $P_0$.

Avantageusement encore, les deux dites butées aux dites extrémités longitudinales en vis-à-vis de deux dits premier et deuxième manchons fixés l'un à l'autre, comprennent des éléments de blocage, aptes à retenir lesdites butées bloquées l'une contre l'autre dès qu'elles rentrent en contact l'une avec l'autre au niveau d'une dite surface de contact en cas de dite rotation maximale $\alpha$.

Plus particulièrement, une première butée à l'extrémité d'un premier manchon comporte un crochet, articulé en rotation sur ladite première butée et une deuxième butée à l'extrémité du deuxième manchon en vis-à-vis de la première butée, comporte une forme, apte à être crochetée par ledit crochet lorsque les deux butées rentrent en contact l'une avec l'autre au niveau d'une dite surface de contact, un élément de rappel élastique coopérant avec ledit crochet maintenant les deux butées en dit contact en empêchant l'écartement des deux butées l'une de l'autre une fois que celles-ci sont rentrées en dit contact.

Plus particulièrement encore, ledit dispositif de fixation et articulation de deux premier et deuxième manchons comprend :

- un premier élément de fixation et articulation comprenant au moins une première pièce définissant au moins une première face plane disposée selon un dit plan radial $P_0$ sur la face supérieure dudit premier manchon à son extrémité longitudinale en vis-à-vis dudit deuxième manchon, ladite première pièce comprenant un orifice circulaire au niveau de ladite première face plane, ledit orifice traversant transversalement au moins ladite première pièce dans une direction dudit axe de rotation YY', $Y_1Y_1'$, $Y_2Y_2'$ perpendiculaire aux dites directions longitudinales axiales XX', $X_1X_1'$, $X_2X_2'$ des deux premier et deuxième manchons, et

- un deuxième élément de fixation et articulation comprenant au moins une deuxième pièce définissant au moins une deuxième face plane disposée selon un dit plan radial $P_0$ sur la face supérieure dudit deuxième manchon à son extrémité longitudinale en vis-à-vis dudit premier manchon, ladite deuxième pièce comprenant un orifice circulaire au niveau de ladite deuxième face plane, ledit orifice traversant transversalement au moins ladite deuxième pièce dans la direction dudit axe de rotation YY', $Y_1Y_1'$, $Y_2Y_2'$ perpendiculaire, aux dites directions longitudinales axiales XX', $X_1X_1'$, $X_2X_2'$ des deux premier et deuxième manchons, et

- une goupille traversant transversalement au moins lesdites première et deuxième pièces au niveau de leurs dits orifices.

On comprend que :

- lesdites première et deuxième faces sont disposées l'une face à l'autre, le cas échéant, sensiblement l'une contre l'autre et lesdits éléments de fixation et articulation sont articulés en rotation par rapport à ladite goupille, celle-ci formant ainsi une pièce d'axe de rotation, et

- le dispositif limiteur de courbure selon la présente invention est donc constitué par la fixation bout à bout d'éléments unitaires courants comportant chacun un dit manchon tubulaire équipé à ses deux extrémités longitudinales, de :

- sur sa face supérieure, un dit premier élément de fixation et articulation à une extrémité et un dit deuxième élément de fixation et articulation à l'autre extrémité, et

- contre sa face inférieure, desdites butées positionnées sensiblement diamétralement opposées aux dits premier et deuxième éléments de fixation et articulation, et

- la fixation entre ledit premier élément de fixation et articulation d'un premier manchon avec ledit deuxième élément de fixation et articulation d'un deuxième manchon se fait grâce à ladite goupille disposée à travers lesdits orifices desdits premier et deuxième éléments de fixation et articulation.

On entend ici par « face supérieure » et « face inférieure » dudit manchon les surfaces supérieure externe et inférieure externe, notamment cylindrique dudit manchon.

En effet, plus particulièrement, ledit manchon comprend une surface externe cylindrique, notamment à section transversale circulaire, définissant un diamètre externe, ainsi qu'un passage central cylindrique, également à section circulaire, définissant un diamètre interne.

On comprend également que ledit organe tubulaire comprend deux éléments unitaires terminaux comportant chacun un dit manchon équipé d'un dit unique premier et respectivement deuxième éléments de fixation et articulation à une seule extrémité longitudinale dudit élément terminal.

Avantageusement encore, dans le dispositif de fixation et articulation selon l'invention:

- ledit premier élément de fixation et articulation comprend au moins une dite première pièce perforée définissant respectivement deux faces planes, parallèles, en vis-à-vis, dont une dite première face, lesdites deux faces planes délimitant un espace vide et étant disposées à une distance de l'une de l'autre, et

- ledit deuxième élément de fixation et articulation comprend au moins une deuxième pièce plate comprenant deux faces planes opposées parallèles dont au moins une dite deuxième face, ladite deuxième pièce plate d'un premier manchon étant fixée à et intercalée entre les deux dites faces planes en vis-à-vis dudit premier élément de fixation et articulation d'un deuxième manchon, de telle sorte que les orifices des deux faces planes opposées dé ladite deuxième pièce plate soient disposées en vis-à-vis des orifices respectivement des deux faces planes dudit premier élément de fixation et articulation.

On comprend que les deux faces planes opposées de ladite deuxième pièce plate sont disposées à une distance l'une de l'autre définissant l'épaisseur de ladite deuxième pièce plate, cette épaisseur étant inférieure à la distance d entre les deux faces planes dudit premier élément de fixation et articulation de manière à ce que ladite deuxième pièce puisse venir s'intercaler entre les deux dites faces planes parallèles dudit premier élément de fixation et articulation.

Ce mode de réalisation est particulièrement avantageux en ce que l'intercalation d'une dite deuxième pièce plate entre les deux dites faces planes d'une dite première pièce apporte un guidage latéral, empêchant tout débattement latéral desdits premier et deuxième manchons l'un par rapport à l'autre, en particulier, en limitant considérablement le jeu de mouvement de ladite deuxième pièce par rapport à ladite première pièce dans ladite direction de l'axe de rotation YY'.

Dans un mode préféré de réalisation, ledit dispositif de fixation et articulation comprend :

- un dit premier élément de fixation et articulation à l'extrémité d'un dit premier manchon comprenant deux dites premières pièces plates perforées comprenant chacune deux faces planes opposées parallèles, les deux premières pièces plates étant disposées parallèlement côte à côte à une dite distance d l'une de l'autre, et

- un dit deuxième élément de fixation et articulation à l'extrémité longitudinale d'un dit deuxième manchon comprenant deux dites deuxièmes pièces plates perforées comprenant chacune deux faces planes opposées parallèles, les deux deuxièmes pièces plates étant disposées parallèlement côte à côte à une dite distance d l'une de l'autre,

- une dite première pièce plate dudit premier manchon étant intercalée entre les deux dites deuxièmes pièces plates du deuxième manchon, et une dite deuxième pièce plate du deuxième manchon étant intercalée entre les deux dites premières pièces plates du premier manchon, et

- une même dite goupille étant disposée à travers les orifices des deux dites premières pièces plates du premier manchon et deux dites deuxièmes pièces plates du deuxième manchon ainsi intercalées.

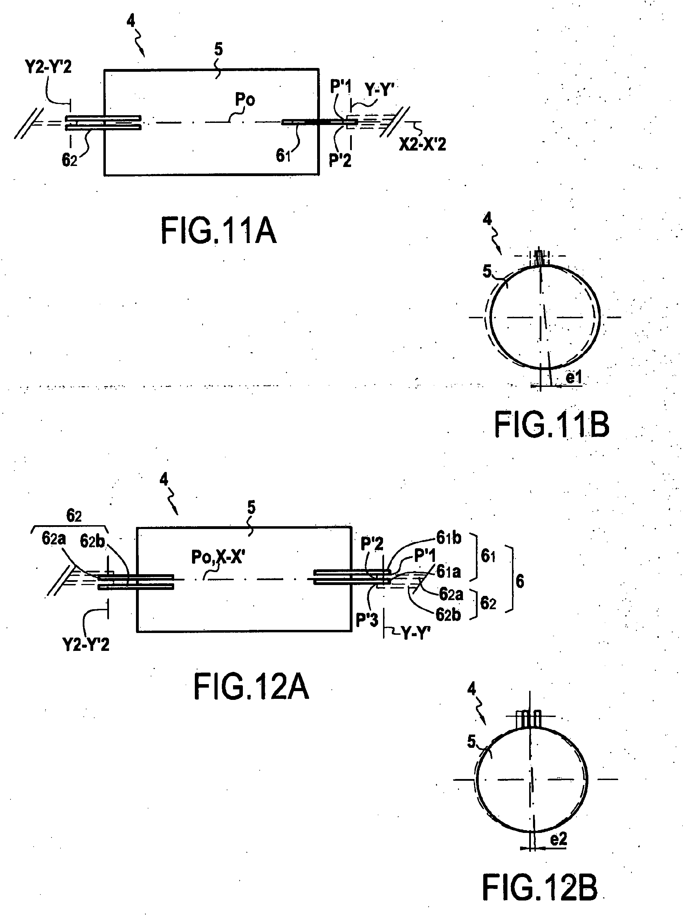

Ce mode de réalisation est particulièrement avantageux, car les contraintes de cisaillement dans la direction axiale XX' au niveau de ladite goupille sont reprises au niveau d'un plus grand nombre de plans de cisaillement, à savoir en l'espèce trois plans de cisaillement $p'_1$, $p'_2$, $p'_3$ (cf. figure 12B), entre trois faces planes des deux dites premières pièces en vis-à-vis de trois faces planes des deux dites deuxièmes pièces.

En outre, l'intercalation d'une dite première pièce plate entre deux dites deuxièmes pièces plates d'une part, et d'autre part d'une dite deuxième pièce plate entre deux dites premières pièces plates, améliore le guidage latéral empêchant tout débattement latéral desdits premier et deuxième manchons, l'un par rapport à l'autre, en particulier en réduisant le jeu de mouvements desdites premières pièces par rapport aux dites deuxièmes pièces dans la direction de l'axe de rotation YY'.

Selon une autre caractéristique préférée de la présente invention, le dispositif limiteur de courbure comporte un dispositif de verrouillage permettant de bloquer une dite ligne flexible à l'intérieur dudit dispositif limiteur de courbure, empêchant ainsi leur mouvement relatif latérale et/ou longitudinal, le diamètre interne dudit manchon étant supérieur au diamètre externe de ladite ligne flexible.

On entend ici par mouvement relatif latéral, un mouvement dans une direction perpendiculaire à ladite direction longitudinale axiale dudit manchon.

Plus particulièrement, ledit dispositif de verrouillage comporte au moins une sangle, de préférence au moins deux sangles, chaque sangle passant à travers deux orifices à la périphérie d'un manchon, de préférence un manchon central dudit organe tubulaire, les deux orifices étant disposés à proximité l'un de l'autre et positionnés à un même niveau dans la direction longitudinale axiale XX' dudit manchon, chaque sangle encerclant, partiellement au moins, ladite ligne flexible à l'intérieur dudit manchon et sortant à ses deux extrémités par respectivement les deux orifices.

On comprend que, le cas échéant, la deuxième sangle et un deuxième couple d'orifices sont disposés à une position différente, dans la direction longitudinale axiale XX' dudit manchon, par rapport à la première sangle et le premier couple d'orifices du manchon.

Avantageusement, chaque dit manchon tubulaire est composé de deux demi-manchons à sections semi-circulaire fixés l'un à l'autre. On comprend que dans ce cas ledit manchon tubulaire obtenu comporte un orifice central longitudinal cylindrique à section transversale circulaire et que chaque demi-manchon présente en section transversale un contour interne semi-circulaire.

Cette caractéristique est avantageuse car elle permet l'installation du limiteur de courbure sur la conduite flexible complètement terminée, c'est-à-dire comportant déjà ses connecteurs d'extrémité. En effet, les connecteurs d'extrémité seraient trop volumineux pour pouvoir passer à l'intérieur des manchons tubulaires du limiteur de courbure.

Selon une autre caractéristique avantageuse, le dispositif limiteur de courbure selon l'invention comporte à une extrémité longitudinale sur sa face inférieure un treuil et un câble enroulé à une extrémité autour dudit treuil, l'autre extrémité du câble étant accrochée à un élément d'accrochage disposé à l'autre extrémité longitudinale dudit organe tubulaire sur sa face inférieure, permettant de tensionner ledit câble par actionnement dudit treuil et enroulement dudit câble autour dudit treuil et, ainsi, de rapprocher ainsi les deux extrémités longitudinales dudit organe tubulaire pour créer une dite courbure.

Cette caractéristique est particulièrement avantageuse, notamment lorsque la conduite est insuffisamment flexible pour que le limiteur de courbure puisse adopter sa position de courbure maximale de par le simple poids propre de la conduite flexible en configuration de chaînette, comme explicité ci-après.

La présente invention fournit également une installation de liaison fond-surface entre un équipement sous-marin, tel qu'une tête de puits sous-marine ou l'extrémité d'une conduite sous-marine reposant au fond de la mer, et un support flottant en surface, comprenant une ligne flexible sous-marine dont la courbure est contrôlée par un dit dispositif limiteur de courbure selon l'invention, ladite ligne flexible étant enfilée à l'intérieur dudit organe tubulaire et ledit dispositif limiteur de courbure étant disposé à une profondeur intermédiaire entre le fond de la mer et la surface.

Plus particulièrement, ladite liaison fond-surface comprend une tour hybride constituée d'une conduite flexible s'étendant depuis un dit support flottant jusqu'à l'extrémité supérieure d'une conduite rigide montante ou riser vertical dont l'extrémité inférieure est reliée à un équipement ou une extrémité d'une conduite sous-marine reposant au fond de la mer, ladite installation comprenant en outre au moins un dispositif limiteur de courbure accroché à ladite colonne montante, de préférence comprenant au moins deux dispositifs limiteurs de courbure accrochés à une même hauteur contre deux faces diamétralement opposées de ladite colonne montante.

La présente invention fournit également un procédé de dépose d'une ligne sous-marine entre un support flottant en surface et le fond de la mer d'une installation de liaison fond-surface selon l'invention, depuis un navire de pose en surface, la courbure de ladite ligne flexible sous-marine étant contrôlée par un dit dispositif limiteur de courbure selon l'invention, disposé à une profondeur intermédiaire entre le fond de la mer et la surface, comprenant les étapes successives suivantes dans lesquelles :

- 1/ ledit dispositif limiteur de courbure est disposé en position rectiligne sur le pont d'un navire de pose, et on déroule ladite ligne flexible depuis une bobine sur le pont du navire en faisant passer la ligne flexible à travers ledit dispositif limiteur de courbure en position fixe sur le pont du navire, et

- 2/ on accroche l'extrémité de ladite ligne flexible à un dit support flottant en surface, et

- 3/ on continue de dérouler ladite ligne flexible à travers ledit limiteur de courbure, tout en éloignant le navire de pose dudit support flottant, de manière à ce que ladite ligne flexible adopte une forme de chaînette plongeante, et

- 4/ lorsqu'une longueur donnée $L_0$ de conduite flexible a été déroulée en passant à travers ledit dispositif limiteur de courbure en position rectiligne, on verrouille ledit dispositif limiteur de courbure sur ladite ligne flexible à l'aide d'un dispositif de verrouillage, et ledit dispositif limiteur de courbure est étant alors entraîné avec ladite ligne flexible en cours de dépose, le dispositif limiteur de courbure étant en configuration de courbure inversée avec une faible courbure à concavité tournée vers le haut, et

- 5/ on approche le dispositif limiteur de courbure à une conduite rigide verticale ou on le suspend à un flotteur en subsurface et on continue le déroulement de ladite ligne flexible de manière à ce que le limiteur de courbure adopte une dite courbure maximale $R_0$ avec sa concavité tournée vers le bas, ledit limiteur de courbure délimitant ainsi deux portions de ligne flexible en forme de chaînette plongeante entre d'une part ledit support flottant et ledit dispositif limiteur de courbure et d'autre part ledit dispositif limiteur de courbure et ledit navire de pose, et

- 6/ on continue la dépose de ladite ligne flexible jusqu'à ce que le point bas de tangence horizontale i de la chaînette plongeante de la deuxième portion de ligne flexible entre ledit dispositif limiteur de courbure et le navire de pose en surface atteigne le fond de la mer et on continue alors la dépose sur le fond de la mer de ladite ligne flexible en éloignant toujours davantage le navire de pose du support flottant tout en déroulant ladite ligne flexible depuis la bobine sur le pont du navire de pose.

Ce procédé de dépose est rendu possible de par la propriété du dispositif limiteur de courbure selon l'invention d'adopter une courbure inversée, comme explicité précédemment.

D'autres caractéristiques et avantages de la présente invention ressortiront mieux à la lumière de la description détaillée qui va suivre, faite de manière illustrative et non limitative, en référence aux dessins sur lesquels :

- les figures 1A et 1B sont des coupes en vue de côté d'un limiteur de courbure selon l'invention en configuration rectiligne, respectivement sans conduite flexible (figure 1A) et avec conduite flexible (figure 1B),

- la figure 1C est une coupe en vue de côté d'un limiteur de courbure en configuration de courbure maximale,

- la figure 2 est une coupe en vue de côté d'un élément courant du limiteur de courbure de la figure 1, présentant des butées inférieures rapportées,

- la figure 3A est une coupe selon le plan AA de la figure 2,

- la figure 3B est une variante de la figure 3A, dans laquelle l'élément courant est réalisé en deux demi-coquilles assemblées entre elles,

- la figure 4A est une vue de face dans la direction B de la figure 2 de la butée inférieure d'un élément courant,

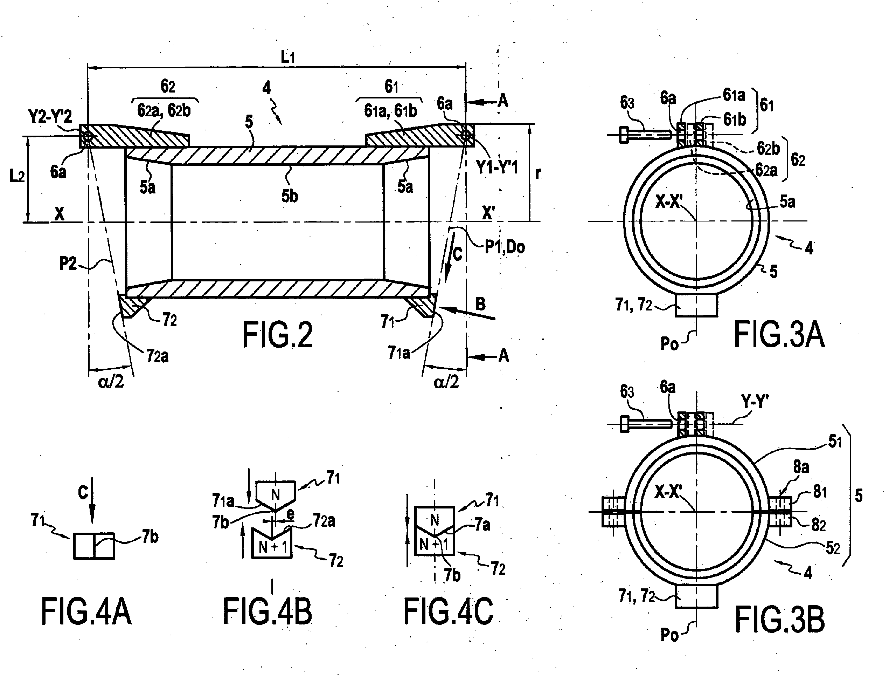

- la figure 4B est une vue de dessus dans la direction C de la figure 2 de l'approche de la butée inférieure d'un élément courant N comprenant un premier manchon vers la butée correspondante de l'élément courant N+1 comprenant un deuxième manchon relié bout à bout au premier manchon par un dispositif de fixation et articulation supérieur 6, les deux butées étant initialement désaxées latéralement d'une valeur « e » correspondant au jeu dans la direction latérale de l'axe de rotation YY' entre un premier élément de fixation et articulation $6_1$ du premier manchon par rapport au deuxième élément de fixation et articulation $6_2$ du deuxième manchon,

- la figure 4C illustre la phase finale d'approche suivant la phase préalable de la figure 4B, les deux butées des éléments N et N+1 étant en contact et ayant un effet de recentrage dans une même direction longitudinale XX' des deux éléments N et N+1 de par la forme diédrique des surfaces de contact des butées.

- la figure 5 est une coupe en vue de côté d'un limiteur de courbure équipé d'un treuil et d'un câble permettant d'imposer par traction sur ledit câble, une courbure maximale audit limiteur de courbure,

- les figures 6A-6B détaillent en coupe en vue de côté un dispositif de blocage au niveau des butées inférieures de deux éléments courants adjacents N et N+1, respectivement en configuration rectiligne (figure 6A) et en configuration de courbure maximale verrouillée (figure 6B),

- les figures 7A, 7B et 7C illustrent en vue de côté le démarrage de l'installation d'une conduite flexible équipée d'un limiteur de courbure selon l'invention respectivement en début de déroulement du flexible (figure 7A), en pose (figure 7B) le flexible coulissant librement dans le limiteur de courbure jusqu'à la cote $L_0$, où ledit limiteur de courbure est verrouillé sur ledit flexible, puis en pose courante après que ledit limiteur de courbure ait franchi la goulotte arrière du navire de pose (figure 7C),

- la figure 8 illustre les phases suivantes, dans lesquelles le limiteur de courbure est positionné à proximité d'un point d'accrochage, puis suspendu à ce dernier, ledit point d'accrochage étant solidaire d'une colonne montante constituée d'une conduite rigide en acier,

- la figure 9A est une coupe horizontale en vue de dessus de la colonne montante de la figure 8 au niveau d'un support présentant un double point d'accrochage permettant l'accrochage de deux dispositifs limiteurs de courbure sur respectivement les deux faces diamétralement opposées d'une conduite rigide,

- la figure 9B est une vue de côté relative à la figure 9A détaillant les deux points d'accrochage dudit support et un élément de flottabilité solidaire de la colonne montante,

- la figure 9C est une variante de la figure 9B d'un support comportant trois points d'accrochage avec un dispositif limiteur de courbure et d'une conduite flexible suspendue à l'un des trois points d'accrochage,

- la figure 10A, représente en vue de côté un élément courant centrale 4b équipé d'un anneau de levage $4b_1$ et d'un unique dispositif de verrouillage 3, comprenant une sangle 3a passant à travers les deux orifices 3b du manchon 5 de l'élément central 4b,

- la figure 10B représente en coupe transversale, le limiteur de courbure au niveau de la sangle 3a en position de blocage de la conduite 2 à l'intérieur du dispositif 1,

- la figure 10C représente en coupe transversale, le limiteur de courbure au niveau de la sangle 3a en position de relâchement autorisant le libre déplacement longitudinal, latéral ou de rotation selon l'axe XX' de la conduite 2 par rapport au dispositif limiteur de courbure 1,

- les figures 11A et 11B représentent un mode de réalisation dans lequel le manchon 5 d'un élément courant 4 du dispositif limiteur de courbure 1 comprend un premier élément de fixation et articulation $6_1$ à une extrémité comportant une seule première pièce plate et un deuxième élément de fixation et articulation $6_2$ à son autre extrémité longitudinale comportant deux deuxièmes pièces plate de même forme que ladite première pièce plate, les deux deuxièmes pièces plates formant donc deux pièces plates espacées l'une de l'autre d'une distance légèrement supérieure à l'épaisseur de l'unique pièce plate du premier dispositif de fixation et articulation $6_1$, en vue de dessus (figure 11A) et en coupe transversale montrant l'intercalation de l'unique pièce plate du premier élément de fixation et articulation $6_1$ d'un premier manchon entre les deux pièces plates du deuxième élément de fixation et articulation $6_2$ à l'extrémité longitudinale d'un deuxième manchon qui lui est fixé,

- les figures 12A et 12B représentent un mode de réalisation préféré dans lequel chacun des deux premier et deuxième éléments de fixation et articulation $6_1$ et $6_2$ respectivement aux deux extrémités longitudinales du manchon 5 d'un élément courant 4 du dispositif limiteur de courbure 1 comporte deux mêmes pièces plates espacées l'une de l'autre et décalées par rapport à un plan axial radial $P_0$ de telle sorte qu'une pièce plate de chacun desdits premier et deuxième éléments de fixation et articulation $6_1$ et $6_2$ est intercalée entre les deux pièces plates des deuxième et respectivement premier éléments de fixation et articulation $6_1$ et $6_2$ de respectivement deux manchons qui leurs sont fixés bout à bout aux deux extrémités longitudinales de l'élément courant 4 représenté en vue de dessus sur la figure 12A et en coupe transversale sur la figure 12B au niveau de deux dits premier et deuxième éléments de fixation et articulation $6_1$ et $6_2$ intercalés,

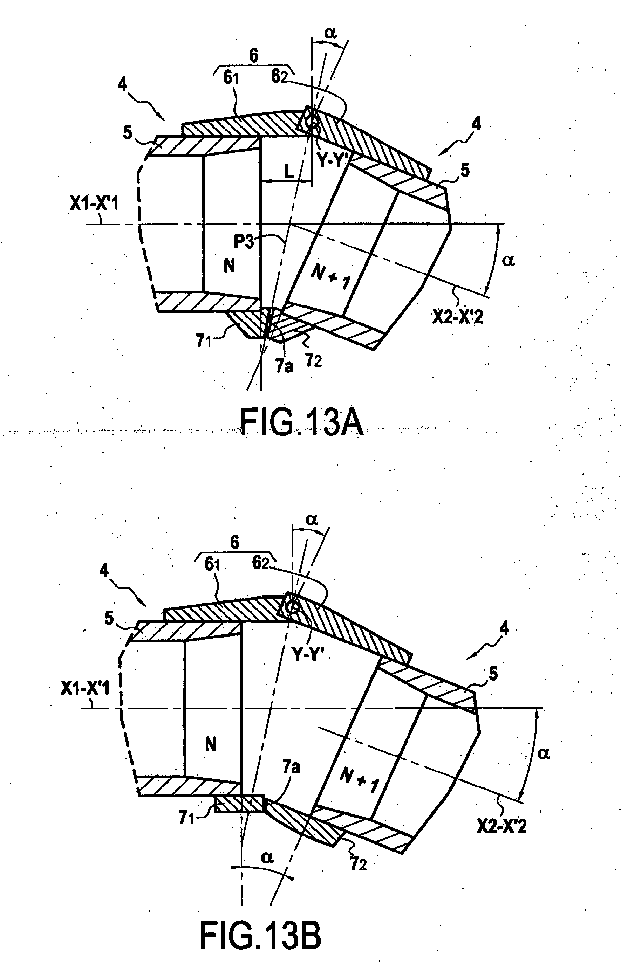

- les figures 13A et 13B représentent en vue de côté en coupe longitudinale deux éléments courants 4 d'un dispositif limiteur de courbure, fixés l'un à l'autre au niveau d'un dispositif de fixation et articulation supérieur 6 et en position de courbure maximale, leurs butées inférieures $7_1$ et $7_2$ étant en contact l'une contre l'autre, les premier et deuxième éléments d'articulation et de fixation $6_1$ et $6_2$ et les deux butées inférieures $7_1$ et $7_2$ des deux premier et deuxième manchons 5 des deux éléments courants 4, (N et N+1) fixés l'un à l'autre étant de même forme, mais disposées symétriquement (figure 13A) ou étant de formes différentes et selon des dispositions non symétriques (figure 13B).

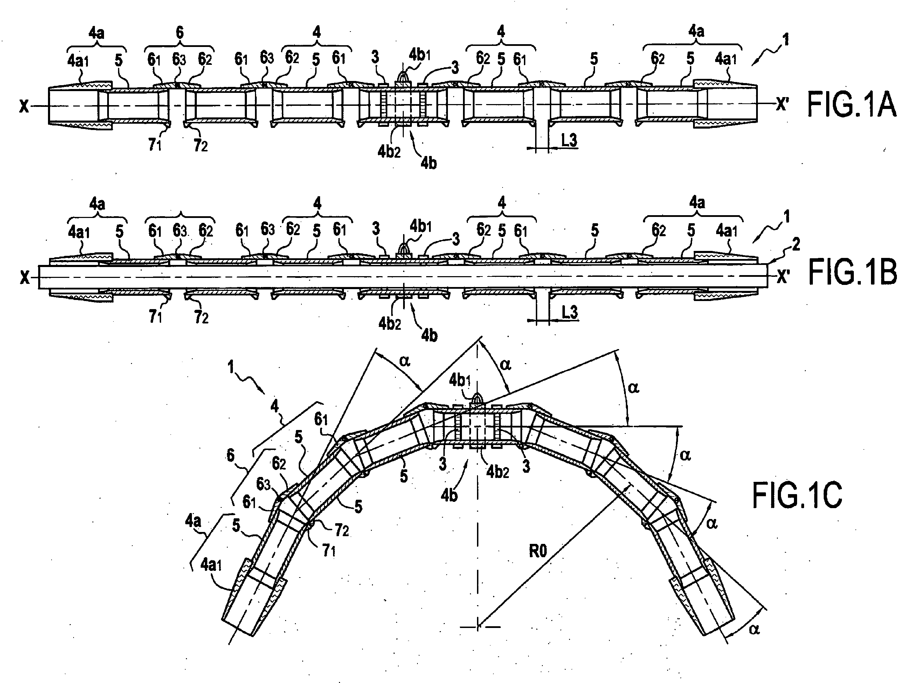

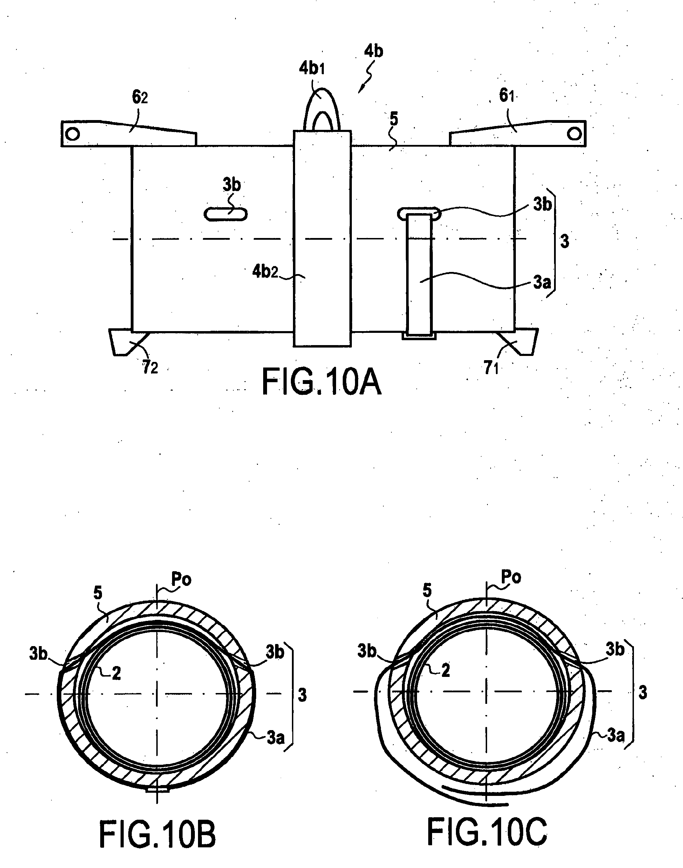

Sur la figure 1A, on a représenté en coupe en vue de côté un limiteur de courbure 1 selon l'invention en configuration rectiligne. Sur la figure 1B il est installé autour d'une conduite flexible 2 et solidarisé à cette dernière au niveau de deux dispositifs de verrouillage 3 représentés en position relâchée 3a sur les figures 10A et 10C, et en position verrouillée 3b sur les figures 10A et 10B.

Sur la figure 1C, ledit limiteur de courbure 1 est représenté en configuration de courbure maximale (rayon $R_0$), ladite courbure étant inférieure à la courbure limite ($R>R_0$) que peut supporter sans endommagement ladite conduite flexible 2.

Le limiteur de courbure est constitué de l'assemblage d'éléments articulés entre eux, à savoir une pluralité d'éléments courants 4, de deux éléments d'extrémité 4a, de préférence identiques, et d'un élément central 4b comportant un dispositif de verrouillage 3 sur la conduite flexible 2 ainsi qu'un anneau de levage $4b_1$ permettant l'accrochage du dispositif limiteur de courbure sur un support qui sera décrit plus avant dans la description de l'invention.

La figure 2 représente en coupe en vue de côté un élément courant constitué d'un manchon ou tube à section circulaire dont le diamètre intérieur est usiné, au niveau de chacune de ses extrémités, en forme de cône 5a évasé vers l'extérieur, c'est-à-dire de diamètre croissant depuis la partie courante 5b vers l'extrémité 5a, de manière à éviter les contacts anguleux avec la conduite flexible 2, donc dangereux pour l'intégrité de cette dernière.

Le limiteur de courbure 1 est constitué d'une pluralité d'éléments courants 4 fixés les uns aux autres successivement bout à bout par des dispositifs de fixation et articulation en rotation supérieurs 6 à leurs deux extrémités longitudinales, avec en outre deux éléments terminaux 4a comprenant un seul dispositif de fixation et d'articulation 6 à l'une de leurs extrémités longitudinales, fixé au seul élément courant 4 qui leur est fixé.

Chaque élément courant 4 ou élément terminal 4a du limiteur de courbure 1 est constitué d'un manchon tubulaire 5 à section circulaire dont le diamètre interne est supérieur au diamètre externe de la conduite flexible 2, celle-ci pouvant ainsi être enfilée librement en son sein, lorsque les dispositifs de verrouillage 3 sont en configuration relâchée.

Chaque manchon 5 d'élément courant 4 comporte à ses deux extrémités longitudinales, respectivement deux premier et deuxième éléments de fixation et articulation $6_1, 6_2$ disposés sur la face supérieure du manchon et comprenant chacun un orifice 6a d'axe YY', $Y_1Y_1$', $Y_2Y_2$' perpendiculaires à la direction XX', $X_1X_1$', $X_2X_2$' longitudinale axiale dudit manchon.

Chaque dit dispositif de fixation et articulation 6 de deux premier et deuxième manchons est constitué par un premier élément de fixation et articulation $6_1$ du premier manchon, et un deuxième élément de fixation et articulation $6_2$ du deuxième manchon, disposés de telle sorte que leurs orifices 6a soient disposés l'un en face de l'autre, lesdits orifices 6a étant traversés par une gou-

pille $6_3$ formant une pièce d'axe de rotation dudit dispositif de fixation et articulation 6 assurant la liaison entre les deux premier et deuxième manchons.

De préférence, ledit premier élément de fixation et articulation $6_1$ à une première extrémité d'un dit manchon est constitué de deux premières pièces plates perforées dénommées ci-après pattes de fixation $6_1$a, $6_1$b comportant chacune deux faces planes opposées s'étendant toutes dans des plans parallèles dans ladite direction longitudinale axiale XX' dudit manchon.

Une seule face plane dénommée « première face » d'une des deux premières pièces plates ou pattes de fixation $6_1$a, $6_1$b est comprise dans un plan axial longitudinal ou plan radial $P_0$ dudit manchon, ladite première face plane étant en vis-à-vis, sensiblement dans un même plan sensiblement radial $P_0$ qu'une deuxième face plane d'une pièce plate dudit deuxième élément de fixation et articulation, à l'extrémité longitudinale d'un deuxième manchon qui lui est fixé comme décrit ci-après.

De même, de préférence, un deuxième élément de fixation et articulation $6_2$ à l'autre extrémité longitudinale dudit manchon est constitué de deux deuxièmes pièces plates perforées ou pattes de fixation $6_2$a, $6_2$b comportant également chacune deux faces planes parallèles opposées s'étendant dans la direction longitudinale axiale dudit manchon, une seule face plane dénommée « deuxième face plane » d'une des deux pièces plates du deuxième élément de fixation et articulation $6_2$, étant comprise dans un dit plan sensiblement radial $P_0$ dudit manchon.

Les deux pièces plates $6_1$a,$6_1$b dudit premier élément de fixation et articulation $6_1$ sont espacées l'une de l'autre d'une distance d légèrement supérieure à l'épaisseur d'une des deux pièces plates $6_2$a, $6_2$b du deuxième élément de fixation et articulation $6_2$, à savoir une pièce plate du deuxième élément de fixation et articulation $6_2$ comportant une dite deuxième face plane. Cette distance d est légèrement supérieure à la distance entre les deux faces planes opposées de ladite pièce plate du deuxième élément de fixation et articulation $6_2$.

De la même manière, les deux pièces plates du deuxième élément de fixation et articulation $6_2$ sont espacées l'une de l'autre d'une distance d légèrement supérieure à l'épaisseur de la pièce plate dudit premier élément de fixation et articulation $6_1$ comprenant une dite première face plane, c'est-à-dire légèrement supérieure à la distance entre les deux faces planes opposées de ladite pièce plate dudit premier élément de fixation et articulation $6_1$.

A titre d'exemple, la distance d entre deux pièces plates ou pattes de fixation du premier ou deuxième élément de fixation et articulation $6_1$,$6_2$ est supérieure d'une valeur égale à 1 mm par rapport à l'épaisseur des pièces plates du deuxième ou respectivement premier élément de fixation et articulation. Cette valeur correspond à un jeu e de 1 mm dans ladite direction dudit axe de rotation YY', $Y_1Y_1$', $Y_2Y_2$' de chaque pièce plate dudit premier ou deuxième élément de fixation et articulation

$6_1$, $6_2$ d'un premier manchon intercalée entre les deux pièces plates du deuxième ou respectivement premier élément de fixation et articulation.

Les deux pièces plates $6_1$a, $6_2$b d'un premier élément de fixation et d'articulation $6_1$ d'un premier manchon et les deux pièces plates $6_2$a, $6_2$b du deuxième élément de fixation et articulation $6_2$ d'un deuxième manchon, sont disposées en décalage les unes par rapport aux autres et par rapport au dit plan radial $P_0$ de telle sorte qu'une pièce plate de chaque dit premier ou deuxième élément de fixation et articulation $6_1$,$6_2$ d'un premier manchon vient s'intercaler entre les deux pièces plates d'un deuxième élément de fixation et articulation $6_2$ du deuxième ou respectivement premier manchon auquel il est fixé avec les quatre orifices $6_3$ des quatre pièces plates $6_1$a-$6_1$b, $6_2$a-$6_2$b traversées par une même goupille $6_3$ disposée transversalement dans une dite direction d'axe de rotation YY', $Y_1Y_1$', $Y_2Y_2$', l'ensemble des quatre pièces plates $6_1$a-$6_1$b, $6_2$a-$6_2$b et de ladite goupille $6_3$ formant ainsi un dit dispositif de fixation et articulation 6 entre deux premier et deuxième manchons.

On comprend que deux premier et deuxième éléments de fixation et articulation $6_2$ situés respectivement aux deux extrémités longitudinales d'un même manchon ne font pas partie d'un même dispositif de fixation et articulation 6, mais que leurs pièces plates sont néanmoins disposées en décalage les unes par rapport aux autres et par rapport au dit plan radial $P_0$ de la même manière que les deux premier et deuxième éléments de fixation et articulation $6_1$ et $6_2$ aux extrémités longitudinales en vis-à-vis de deux premier et deuxième manchons fixés l'un à l'autre.

Le mode de réalisation représenté figure 12A et 12B dans lequel chaque dit premier et deuxième éléments de fixation et articulation $6_1$-$6_2$ comporte deux pièces plates est avantageux par rapport au mode de réalisation décrit sur les figures 11A et 11B, dans lesquelles l'un des deux premier et deuxième éléments d'articulation et de fixation $6_1$-$6_2$ ne comporte qu'une pièce plate.

En effet, sur les figures 11A et 11B, l'axe de rotation YY' et la goupille $6_3$ sont contraints au niveau de deux plans de cisaillement $p_1$ et $p_2$, alors que sur les figures 12A et 12B, les contraintes de cisaillement dans la direction axiale XX' sont reprises au niveau de trois plans de cisaillement $p_1$, $p_2$ et $p_3$, ce qui réduit d'autant les contraintes dans ledit axe YY' et ladite goupille $6_3$. Lorsque chacun desdits premier et deuxième éléments de fixation et articulation $6_1$, $6_2$ comporte deux pièces plates, avec une pièce plate de chacun desdits premier et deuxième éléments de fixation et articulation $6_1$, $6_2$ intercalés entre les deux pièces plates de l'autre deuxième et respectivement premier élément de fixation et articulation $6_2$,$6_1$, il y a trois plans de cisaillement $p_1$, $p_2$ et $p_3$ correspondant aux trois faces planes des deux pièces plates du premier élément de fixation et articulation $6_1$ disposées en face ou en vis-à-vis des trois faces planes des deux pièces plates du deuxième élément de fixation et articulation $6_2$ résultant de cette intercalation.

En outre, comme montré sur les figures 11B et 12B, le guidage latéral dans la direction YY' au niveau de l'articulation se trouve amélioré dans le cas de dits premier et deuxième éléments de fixation et articulation $6_1, 6_2$ comportant deux pièces plates, comme représenté sur les figures 12A et 12B par rapport au cas dans lesquels l'un des premier et deuxième éléments de fixation et articulation $6_1, 6_2$ comporte une seule pièce plate, comme représenté sur les figures 11A et 11B.

En effet, bien que dans les deux cas, l'intercalation des premier et deuxième éléments de fixation et articulation $6_1, 6_2$ au niveau d'une pièce plate au moins de chacun d'eux entre deux pièces plates de l'autre, confère un guidage latéral empêchant tout débattement latéral autre qu'un jeu réduit $e_1, e_2$ dans la direction de l'axe de rotation YY', c'est-à-dire au niveau de la goupille $6_3$ traversant les perforations 6a, le jeu maximal $e_2$ dans la figure 12B est inférieur au jeu maximal $e_1$ de la figure 11B. Ceci résulte du fait que dans le mode de réalisation des figures 11A et 118, seule l'unique pièce plate $6_1$ du premier élément de fixation et articulation $6_1$ est intercalée entre les deux pièces plates du deuxième élément de fixation et articulation $6_2$, les deux pièces plates du deuxième élément de fixation et articulation $6_2$ ne venant buter latéralement que sur une de leurs faces contre l'unique pièce plate du premier élément de fixation et articulation $6_1$.

Aux deux extrémités longitudinales de chaque manchon 5, en partie inférieure de celui-ci, sensiblement au niveau dudit plan radial $P_0$, c'est-à-dire sensiblement diamétralement opposées aux dits premier et deuxième éléments de fixation et articulation $6_1$ et $6_2$ se trouvent disposées respectivement deux butées $7_1$ et $7_2$ dénommées « butées inférieures ». Lesdites pièces plates $6_1a$-$6_1b$, $6_2a$-$6_2b$ et lesdites butées $7_1$-$7_2$ sont rapportées sur les face supérieure et respectivement face inférieure des extrémités longitudinales des manchons 5 par boulonnage ou de préférence par soudage. Les faces sont dénommées « supérieure » et « inférieure » parce qu'en général le limiteur de courbure 1 est positionné de manière à soutenir une ligne flexible sous-marine en créant une courbure à concavité tournée vers le fond de la mer 16, c'est-à-dire vers le bas, auquel cas les butées $7_1$ et $7_2$ doivent être positionnées sur lesdites faces inférieures, tandis que la face convexe de la courbure du limiteur de courbure et de la ligne flexible sont tournées vers le haut, requérant donc que les dispositifs de fixation et articulation 6 soient rapportés sur les faces supérieures vers le haut, c'est-à-dire vers la surface 17.

Les butées inférieures $7_1$ et $7_2$ ne sont pas nécessairement de même forme, mais, dans tous les cas, elles présentent une face frontale $7_1a$, $7_2a$ de forme plane ou tridimensionnelle telle que lorsque lesdites butées $7_1$ et $7_2$ aux deux extrémités en vis-à-vis de deux manchons fixés l'un à l'autre rentrent en contact en cas de rotation maximale $\alpha$ du dispositif de fixation et articulation 6 des deux manchons, lesdites faces frontales $7_1a$ et $7_1b$ des deux butées $7_1$ et $7_2$ présentent une surface de contact commune 7a de préférence plane ou tridimensionnelle.

Deux éléments courants adjacents 4, articulés entre eux par un dispositif de fixation et articulation 6, peuvent soit être en configuration rectiligne $R\infty$, comme représenté sur les figures 1A et 1B, soit présenter une courbure de rayon R, jusqu'au rayon de courbure minimal $R_0$, correspondant au contact entre la face frontale $7_1a$ de l'élément courant N et la face frontale $7_2b$ de l'élément courant N+1.

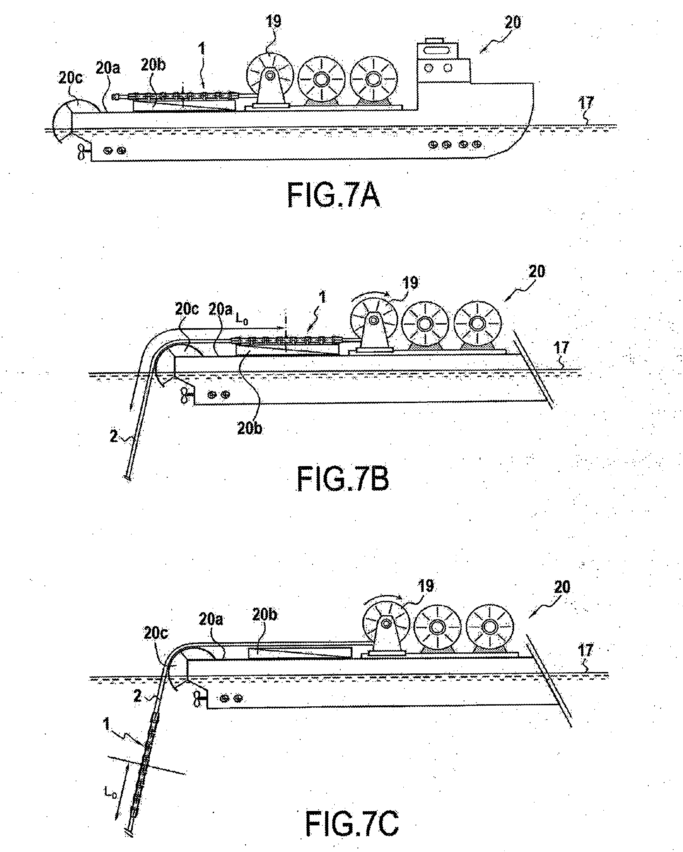

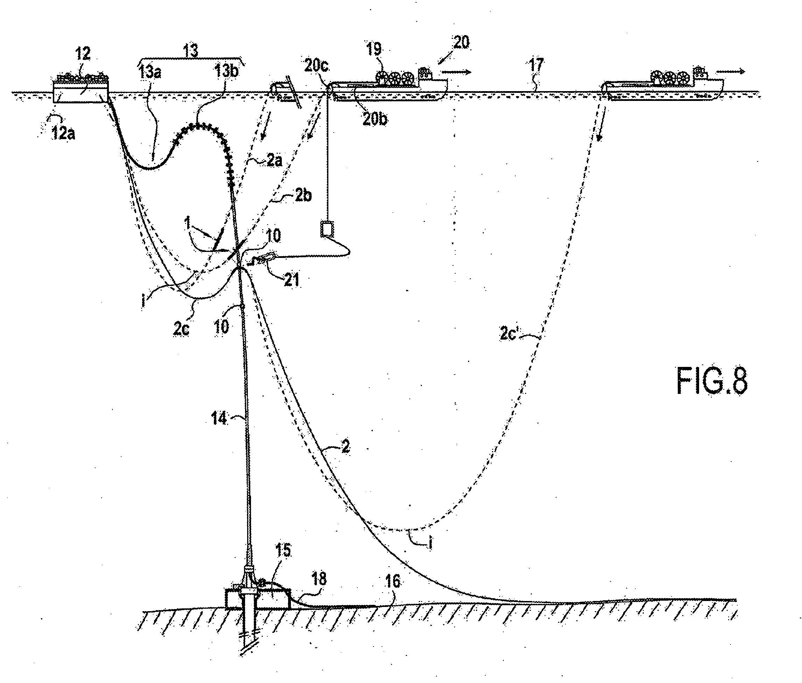

Il convient de noter que la courbure, représentée vers le bas sur la figure 1C, peut tout aussi bien être effectuée vers le haut, dans la direction opposée, c'est-à-dire en courbure inversée. Dans ce cas, il n'y a pas d'effet de limitation de courbure. Ceci est avantageux, car la courbure dans cette direction permet de mettre en place le dispositif de limiteur de courbure 1 autour d'une conduite flexible 2 lors du stockage et du transport de la conduite flexible enroulée sur des bobines notamment à bord de navires de pose 20 avec un rayon de courbure inférieur à $R_0$, comme il sera expliqué plus avant dans la description en référence à la figure 7A. D'autre part, cette possibilité de courbure inversée est avantageuse lors de la pose en mer du dispositif limiteur de courbure comme il sera également explicité ci-après en liaison avec la figure 8.

Dans un mode de réalisation non préféré, représenté sur les figures 2, 6A, 6B et 13A, chaque dite butée $7_1$-$7_2$ présente une face frontale $7_1a$, $7_1b$ plane selon des plans $P_1$, $P_2$ comprenant l'axe de rotation YY' du dispositif de fixation et articulation 6. Dans cette version non préférée de l'invention, la butée inférieure $7_1$, $7_2$ peut être réalisée par simple fraisage de la partie inférieure de l'extrémité longitudinale du manchon tubulaire 5 selon le plan $P_1$, $P_2$ passant par l'axe de rotation YY'. Dans ce mode de réalisation, les plans $P_1$ et $P_2$ sont inclinés d'un même angle $\alpha/2$ par rapport au plan de section transversale perpendiculaire à l'axe longitudinal $X_1X_1'$ et respectivement $X_2X_2'$ du manchon tubulaire 5, et l'angle de rotation maximale de l'axe longitudinal $X_1X_1'$ du premier manchon de l'élément N par rapport à l'axe longitudinal $X_2X_2'$ du deuxième manchon de l'élément courant N+1 étant $\alpha$.

On comprend que les deux plans $P_1$, $P_2$ se réunissent selon un plan bissecteur P3 lorsque les deux faces frontales $7_1a$ et $7_2a$ sont en contact, le plan $P_3$ étant un plan bissecteur passant une bissectrice des deux axes longitudinaux $X_1X_1'$ et $X_2X_2'$.

Dans une version préférée de l'invention représentée sur les figures 4A-4B-4C, la butée $7_1$ de l'élément courant N présente une face $7_1a$ non pas plane, mais en forme de dièdre convexe, comprenant un plan $P_0$ de symétrie comprenant l'axe longitudinal $X_1X'_1$, $X_2X'_2$, comme représenté sur la figure 4B, et la butée correspondante $7_2$ de l'élément adjacent N+1 présente une face frontale $7_2a$ de forme complémentaire de dièdre concave. Dans ce cas, c'est l'arête 7b du dièdre qui est alignée avec une droite $D_0$ passant par l'axe de rotation YY'. Du fait qu'il peut exister un jeu latéral e dans la direction de l'axe de rotation YY', $Y_1Y_1'$, $Y_2Y_2'$ au niveau du dispositif de fixation et articulation 6, lorsque le dispositif 1 se rapproche de la courbure maximale $R_0$, les deux butées $7_1$, $7_2$ peuvent être décalées dans la direction YY', $Y_1Y_1'$, $Y_2Y_2'$ d'une valeur « e » comme représenté sur la figure 4B. Mais, dès que les butées $7_1$, $7_2$ entrent en contact, elles se recentrent automatiquement avec les arêtes 7b des dièdres des faces frontales $7_1$a, $7_1$b (et les manchons N et N+1) alignées sensiblement dans un même plan longitudinal axial au plan radial $P_0$. Et, ainsi, tous les éléments courants 4 du limiteur de courbure 1 se trouvent avec leurs axes longitudinaux XX', $X_1X_1'$, $X_2X_2'$ sensiblement dans le même plan radial $P_0$ (ZOX). En revanche, si les faces frontales $7_1$a et $7_2$a sont planes, il n'y a pas cet effet de recentrage, mais, au contraire, un cumul d'une pluralité de décentrements « e » au niveau de chacun des dispositifs de fixation et articulation 6, et le dispositif n'est alors pas stable latéralement selon l'axe YY'. Il peut alors en résulter, sous l'effet des courants des instabilités latérales, donc des mouvements alternés au niveau des butées planes en contact $7_1$a, $7_1$b, pouvant conduire à des usures, donc à une réduction non souhaitable du rayon de courbure $R_0$. Ainsi, la forme dièdre est très avantageuse, car le l'ensemble des éléments du dispositif se trouvent verrouillés dans un même plan radial $P_0$, et la conduite flexible se trouve alors en sécurité, de la même manière que sur une goulotte en structure mécano-soudée de l'art antérieur.

D'autres formes que des dièdres concaves-convexes complémentaires tels que décrits précédemment, peuvent fournir un recentrement des éléments courants les uns par rapport aux autres, telles que des formes incurvées complémentaires, notamment des formes circulaires concaves-convexes complémentaires ou des formes paraboliques concaves-convexes complémentaires. Néanmoins le dièdre reste une forme simple à usiner et à ce titre constitue la version préférée de l'invention.

Dans tous les cas, l'angle de rotation maximal $\alpha$ entre les axes longitudinaux $X_1X_1'$ et $X_2X_2'$ fixés l'un à l'autre grâce à un dit dispositif de fixation et articulation 6 est d'environ 20° comme représenté sur les figures, de sorte que, lorsque - comme représenté figure 1C - le dispositif limiteur de courbure 1 comprend cinq éléments courants 4 et deux éléments terminaux 4a fixés les uns aux autres bout à bout, par respectivement six dispositifs de fixation et articulation 6 espacés les uns des autres d'une même distance $L_1$ et positionnés avec les axes de rotation YY', $Y_1Y_1'$, $Y_2Y_2'$ à une même distance $L_2$ des axes longitudinaux XX', $X_1X_1'$, $X_2X_2'$ des manchons, les deux axes longitudinaux des deux éléments terminaux 4a forment un angle de 6 x 20 = 120°; correspondant à un rayon de courbure $R_0$ = 1.68m, lorsque $L_1$ = 0.7m et $L_2$ = 0.3m.

Sur la figure 3B, on a représenté en coupe en vue de face une variante de réalisation des éléments courants dans laquelle le manchon tubulaire 5 est réalisé en deux demi-coquilles $5_1$ et $5_2$. Chacune des demi-coquilles présente de part et d'autres des pattes de fixation, respectivement $8_1$ et $8_2$, solidarisées par exemple par soudage aux dites demi-coquilles, et assemblées entre elles par des boulons 8a, non représentés. Cette disposition est avantageuse, car elle permet l'installation d'un limiteur de courbure 1 sur une conduite flexible 2 complètement terminée, c'est à dire comportant ses connecteurs d'extrémités. En effet, le limiteur de courbure 1 de la figure 3A nécessite de passer ladite conduite flexible 2 à travers l'ensemble des éléments 4 du limiteur de courbure 1 avant de pouvoir monter les connecteurs d'extrémité qui sont en général encombrants et ne peuvent donc pas passer à travers ledit limiteur de courbure 1.

Les éléments d'extrémités 4a du limiteur de courbure 1 ne comportent une articulation 6 et une butée $7_1$, $7_2$ que d'un côté. A la seconde extrémité, dépourvue d'articulation 6 et de butées $7_1$, $7_2$, on installe avantageusement un élément de transition de courbure $4a_1$, connu de l'homme de l'art, de forme cylindro-conique réalisé en matériau élastomère ou thermoplastique, tel du polyuréthanne, et solidarisé à ladite extrémité dudit élément 4a. Toutes les autres pièces du dispositif limiteur de courbure, à savoir les manchons 5, butées $7_1,7_2$ et pièces plates $6_1$a-$6_1$b,$6_2$a-$6_2$b et goupille $6_3$ constituant les dispositifs de fixation et articulation 6 sont avantageusement réalisées en acier.

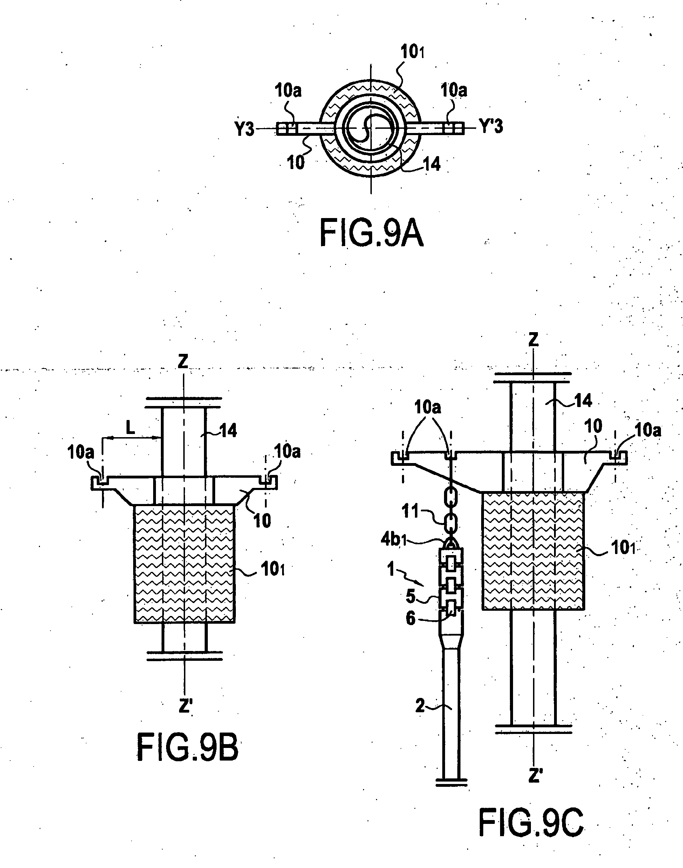

Comme représenté sur la figure 10A, le manchon 5 de l'élément central 4b du limiteur de courbure 1, est entouré d'un renfort central périphérique annulaire $4b_2$ sur lequel est installé en face supérieure du manchon 5 un anneau de suspension $4b_1$ auquel est reliée une petite longueur de chaîne 11, non représentée sur cette figure, mais représentée sur la figure 9C. On dispose avantageusement sur le même élément central 4b un dispositif de verrouillage 3 comprenant une sangle 3a et deux ouvertures 3b disposées symétriquement par rapport à un plan radial P0 sur la partie supérieure du manchon 5 de telle sorte que la sangle 3a passe par les deux ouvertures 3b et au-dessus de la face supérieure de la conduite flexible 2 à l'intérieur du manchon 5 et en dessous de la face inférieure du manchon 5 à l'extérieur des ouvertures 3b. Ainsi, lorsque la sangle 3a est tendue, la conduite flexible 2 se trouve plaquée contre la paroi interne du manchon 5 du côté de sa face inférieure, de manière à éviter que ladite conduite flexible ne puisse coulisser librement selon l'axe XX' ou dans une direction latérale perpendiculaire à l'axe XX', ni même tourner sur lui-même autour de l'axe XX'. Ledit dispositif de verrouillage 3 est représenté en position relâchée sur les figures 1A, 1C et 10C, et en position verrouillée sur les figures 1B, 10A et 10B.

Sur les figures 7A-7B-7C et 8, on a représenté en vue de côté les principales phases d'installation d'une conduite flexible 2 équipée d'un limiteur de courbure 1 selon l'invention, à partir d'un navire d'installation 20. Sur la figure 7A, le flexible 2 précédemment stocké enroulé sur la bobine 19 est déroulé et l'extrémité du flexible 2 (non enroulé) équipé du limiteur de courbure 1 repose horizontalement sur un support 20b posé sur le pont 20a du navire de pose 20, de telle manière que la conduite flexible 2 soit sensiblement tangente à la surface incurvée d'une goulotte de pose 20c située en général à l'arrière du navire 20. Lors du stockage du flexible 2 sur la bobine 19, le limiteur de courbure 1 se trouve en courbure inversée, donc n'a aucun effet de limitation de courbure, ce qui ne présente pas de problème, car il n'y a aucune tension dans ladite conduite flexible 2 à ce stade. Ensuite, le limiteur de courbure 1 est solidarisé à son support 20b et l'on commence la pose de la conduite 2 défilant à l'intérieur du dispositif limiteur de courbure 1 fixe comme représenté sur la figure 7B. Lorsqu'une certaine longueur $L_0$ de conduite flexible 2 a été déroulée (la longueur $L_0$ s'entendant de la longueur de conduite flexible 2 depuis son extrémité sous-marine), on arrête la pose, c'est-à-dire on arrête de dérouler la conduite flexible 2 et on désolidarise le limiteur de courbure 1 de son support 20b et on verrouille le limiteur de courbure 1 sur la conduite flexible 2, puis on reprend la pose comme représenté sur la figure 7C.

Sur la figure 8, on a représenté en vue de côté un FPSO 12 ancré sur site en 12a et comportant une liaison fond-surface telle que décrite dans le brevet de la demanderesse WO-2009-138609, et comportant une colonne montante en acier 14 solidaire d'une embase ou équipement sous-marin 15 ancré(e) sur le fond de la mer 16. Elle est connectée en partie haute à une conduite flexible 2 reliée au FPSO, ladite conduite flexible 13 comportant sur une partie de sa longueur à partir de la conduite 14 une pluralité d'éléments flottants 13b et, sur la partie du côté du support flottant 12, un forme en chaînette plongeante 13a. On a préalablement installé aux 2/3 environ de la hauteur d'eau un support d'accroche 10 représenté sur la figure 9A en coupe selon un plan sensiblement horizontal et sur les figures 9B-9C en vue de côté, destiné à recevoir le dispositif d'accrochage 9 du limiteur de courbure 1.

Ainsi, sur cette même figure 8, les différentes étapes d'installation sont :

- étape 1/ : on déroule la conduite flexible depuis le navire de pose 20, l'extrémité de la conduite flexible ayant été accrochée au support flottant 12, de telle sorte que la partie sous-marine de la conduite flexible adopte une forme de chaînette plongeante 2a, le limiteur de courbure étant alors en configuration de courbure légèrement inversée.

- étape 2/ : on approche le limiteur de courbure 1 vers le riser vertical 14 au niveau d'un support d'accroche 10, le limiteur de courbure 1 étant toujours en configuration de courbure inversée, à l'aide du ROV sous-marin 21 piloté depuis le navire de pose 20. Puis, on accroche la chaîne de suspension 11 du limiteur de courbure 1 sur le support d'accroche 10a, la conduite flexible 2 sous-marine étant toujours en forme de chaînette plongeante 2b avec son point de tangence horizontale inférieur i situé dans la partie de la chaînette 2b située entre le support flottant 12 et le support d'accroche 10, le navire de pose 20 continuant à s'éloigner du support flottant 12 de l'autre côté de la conduite 14 par rapport au support flottant 12.

- étape 3/ : on poursuit l'éloignement du navire 20 et la pose de la conduite 2, la courbure du limiteur de courbure 1 changeant de sens et présentant alors une concavité tournée vers le bas, le rayon de courbure diminuant jusqu'à un rayon de courbure minimal limite $R_0$ qui est atteint lorsque que les butées $7_1$ et $7_2$ des divers manchons 5 du limiteur de courbure 1 sont en contact intime. A ce stade, la conduite flexible 2 comprend deux portions en forme de chaînette plongeante, de part et d'autre du limiteur de courbure 1, à savoir une première chaînette plongeante 2c entre le support flottant 12 et le limiteur de courbure 1, et une deuxième chaînette plongeante 2c' entre le limiteur de courbure 1 et le navire de pose 20.

- étape 4/ : dès que la conduite flexible 2 repose sur le fond marin 16, elle adopte une courbure en chaînette simple 2d, et la dépose de la conduite flexible 2 sur le fond 16 continue par éloignement du navire 20 vers la tête de puits de destination.

Le support d'accroché 10 décrit sur les figures 9A-9B-9C est solidarisé à la colonne montante rigide 14, par exemple par soudage et s'étend latéralement en forme de potence dans la direction $Y_3Y_3'$, de manière à ce que le point d'accrochage, constitué par une simple encoche 10a soit déportée par rapport à la paroi extérieure de la conduite rigide, d'une distance supérieure au rayon extérieur maximal « r » du limiteur de courbure, de préférence supérieur à 2 fois ledit rayon « r ». Comme illustré sur les figures 9A-9B. Avantageusement, la potence de supportage 10 s'étend de part et d'autre de la conduite rigide 14 dans la direction $Y_3Y_3'$ perpendiculaire à l'axe $Z_3Z_3'$ de la conduite 14, de préférence de manière symétrique, ce qui autorise l'installation de deux conduites flexibles 2 équipées d'un limiteur de courbure selon l'invention 1 sur les deux faces diamétralement opposées de la conduite rigide 14.

Dans le cas d'ombilicaux ou de câbles électriques de faible diamètre, par exemple de 40 à 75 mm, donc de faible poids linéaire, on dispose avantageusement une pluralité de points d'accrochage 10a sur chacune des potences, de manière à installer, de préférence de manière sensiblement symétrique en termes de charge verticale, une pluralité de conduites flexibles 2 à même hauteur d'accrochage sur la conduite rigide 14, comme représenté sur la figure 9C. Une conduite flexible lourde 2 équipée d'un limiteur de courbure 1 est suspendu à l'encoche 10a de la potence 10 la plus proche de la conduite 14 à gauche de la conduite rigide 14, une seconde encoche 10a située à l'opposé, donc à droite de la conduite rigide étant destinée à recevoir une seconde conduite flexible, donc à droite de la conduite rigide, est prête à recevoir une seconde conduite flexible de caractéristiques similaires, une troisième encoche 10a la plus éloignée de la conduite à gauche de ladite conduite rigide 14 étant destinée à recevoir une troisième conduite flexible légère. Ainsi, dans le cas de points d'accrochages 10a multiples, pour limiter les efforts de flexion dans les potences 10 et dans la conduite rigide 14, on installera de préférence les conduites flexibles les plus lourdes au plus près de la conduite rigide, les conduites flexibles légères étant avantageusement installées vers l'extérieur.

Avantageusement, comme représenté sur la figure 8, on dispose une pluralité de supports d'accrochages 10 à des hauteurs différentes, de manière à éviter des interférences entre les différentes conduites flexibles installées sur le même support d'accrochage 10.

Le poids propre de la ou des conduites flexibles 2 en suspension entre le fond marin 16 et le FPSO 12, ainsi que le poids propre du/des limiteurs de courbures 1, étant repris principalement au niveau du support d'accrochage 10, on dispose avantageusement au niveau dudit support d'accrochage 10 un élément dé flottabilité $10_1$ qui vient alors compenser soit partiellement, soit totalement, le cas échéant en excès, ledit poids propre de tous les éléments, à savoir potences 10, conduites flexibles 2 et limiteurs de courbures 1, suspendus sur la conduite 14.

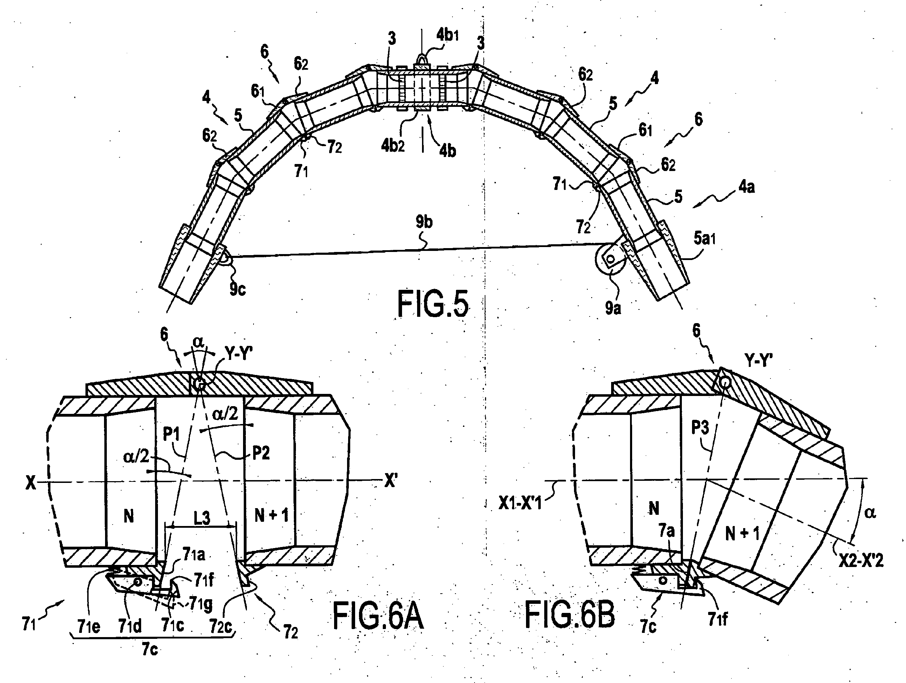

Certaines conduites flexibles ou ombilicaux présentent une relativement grande raideur et sous leur poids propre la courbure maximale désirée $R_0$ correspondant à la mise en contact des butées adjacentes $7_1$ (élément N) et $7_2$ (élément N+1), ne peut être atteinte. Pour éviter que lors des déplacements du FPSO 12 et de la colonne montante 14 sous les effets de la houle, du vent et des courants marins, le limiteur de courbure 1 ne se déforme en permanence, on contraint avantageusement le limiteur de courbure 1 de manière à ce que toutes les butées adjacentes $7_1$-$7_2$ restent en permanence en contact intime, garantissant ainsi un rayon de courbure maximal stable et égal à $R_0$. A cet effet, comme représenté en coupe en vue de côté sur la figure 5, on installe avantageusement une extrémité longitudinale du dispositif limiteur de courbure 1, en face inférieure du dernier élément 4a du limiteur de courbure 1 un moyen de traction, tel un treuil 9a relié à un câble 9b, la seconde extrémité du câble étant reliée à un point d'accrochage 9c solidaire de l'extrémité gauche de l'autre élément terminal 4a dudit limiteur de courbure en face inférieure. Ainsi, pendant toutes les phases de l'installation de la conduite flexible 2 décrite en référence aux figures 7A-7B-7C et 8, le câble 9b est maintenu lâche. Lorsque le limiteur de courbure 1 est en position finale, accroché sur l'encoche 10a, tel que décrit sur la figure 9C, le ROV 21 actionne le treuil 9a de manière à tendre le câble 9b et à contraindre ainsi le limiteur de courbure 1 à se courber jusqu'à ce que les butées $7_1$-$7_2$ de deux éléments adjacents 4, 4a soient en contact intime. Le treuil 9a possède un dispositif de blocage, non représenté, qui maintient alors en tension permanente le câble 9b, ce qui garantit ainsi un rayon de courbure minimal $R_0$ constant pendant toute la durée de vie de l'installation.

Dans une version préférée de l'invention représentée sur les figures 6A-6B, on installe avantageusement sur les butées adjacentes $7_1$-$7_2$ des éléments 4,4a respectifs N et N+1, un dispositif de blocage des butées 7c constitué d'un crochet $7_1$c articulé en $7_1$d sur la butée $7_1$ de l'élément N, un ressort de poussée $7_1$e maintient ledit crochet $7_1$c en position enclenchée $7_1$f. La butée $7_2$ solidaire de l'élément N+1 présente un redent $7_2$c destiné à coopérer avec l'extrémité du crochet $7_1$c. Ainsi, lorsque les butées $7_1$-$7_2$ des éléments N et N+1 se rapprochent, le crochet $7_1$c en contact avec la butée $7_2$, s'écarte en prenant la position $7_1$g, puis une fois les butées $7_1$-$7_2$ en contact intime, ledit crochet ayant franchi le redent $7_2$c reprend sa position verrouillée $7_1$f, comme illustré sur la figure 6B. Lorsque tous les crochets $7_1$c sont verrouillés, le limiteur de courbure 1 est alors bloqué en position définitive et le rayon de courbure $R_0$ est alors assuré de manière permanente.

## Revendications

1. Dispositif limiteur de courbure (1) formant un organe tubulaire apte à adopter une position rectiligne ou une courbure variable en interdisant un rayon de courbure inférieur à un rayon de courbure minimal donné ($R_0$) et ainsi autoriser une courbure variable contrôlée ou l'absence de courbure d'une ligne flexible (2) enfilée à l'intérieure dudit organe tubulaire, ledit organe tubulaire comprenant une pluralité de manchons tubulaires (5) disposés bout à bout à leurs extrémités longitudinales, de préférence au moins 3 manchons, de préférence encore de 3 à 9 manchons, lesdits manchons (5) étant fixés les uns aux autres par des dispositifs de fixation et articulation en rotation (6) disposés sur la face supérieure de chacun desdits manchons, au niveau de leurs extrémités longitudinales, lesdits dispositifs de fixation et articulation en rotation (6) autorisant une rotation de l'axe longitudinale (XX', $X_1X_1$') d'un premier manchon (5, N) par rapport à l'axe longitudinale (XX', $X_2X_2$') d'un deuxième manchon (5, N+1) fixé au dit premier manchon par l'intermédiaire dudit dispositif de fixation et articulation (6), ladite rotation se faisant autour d'un axe de rotation (YY', $Y_1Y_1$', $Y_2Y_2$') perpendiculaire aux deux dits axes longitudinaux (XX', $X_1X_1$', $X_2X_2$') desdits premier et deuxième manchons, de préférence les deux axes de rotation ($Y_1Y_1$', $Y_2Y_2$') des deux dispositifs de fixation et articulation (6) disposés aux deux extrémités longitudinales opposées de chaque manchon étant disposés à une même distance ($L_2$) de l'axe longitudinale

($XX'$, $X_1X_1'$, $X_2X_2'$) du dit manchon, lesdits manchons comprenant en outre à leurs deux extrémités longitudinales respectivement deux butées de forme complémentaire ($7_1$, $7_2$), disposées contre les faces inférieures desdits manchons en positions sensiblement diamétralement opposées par rapport aux dits dispositifs de fixation et articulation (6), les deux faces frontales d'extrémité ($7_1a$, $7_2a$) des deux butées ($7_1$, $7_2$) aux extrémités longitudinales en vis-à-vis desdits premier et deuxième manchons (5, N-N+1) étant espacées l'une de l'autre lorsque ledit organe tubulaire est en position rectiligne, et présentant une surface commune de contact (7a) lorsque les deux dites butées sont en contact l'une avec l'autre de par la rotation maximale autorisée ($\alpha$) des deux faces inférieures des deux dits manchons l'une vers l'autre grâce aux dits dispositifs de fixation et articulation (6), ledit dispositif limiteur de courbure autorisant en outre une courbure inversée par pivotement vers le haut des deux manchons par rapprochement de leurs faces supérieures, **caractérisé en ce que** lesdits dispositifs de fixation et articulation (6) n'autorisent aucun débattement longitudinal ou latéral des différents manchons (5) les uns par rapport aux autres.

2. Dispositif selon la revendication 1, **caractérisé en ce que** ladite surface de contact (7a) desdites butées ($7_1$, $7_2$) comprend au moins un plan.

3. Dispositif selon la revendication 1 ou 2, **caractérisé en ce que** lesdites faces frontales ($7_1a$, $7_2a$) de deux butées comprennent des surfaces tridimensionnelles de formes complémentaires, respectivement concave et convexe, de sorte que ladite surface de contact (7a) présente une forme tridimensionnelle empêchant tout mouvement latéral des deux dits premier et deuxième manchons (5, N-N+1), l'un par rapport à l'autre, dans une direction perpendiculaire à l'un desdits axes longitudinaux ($X_1X_1'$, $X_2X_2'$) desdits premier et deuxième manchons, et ayant un effet de centrage des axes longitudinaux ($X_1X'$, $X_2X'$) desdits premier et deuxième manchons sensiblement selon un même plan axial longitudinal $P_o$ lorsque les deux dites butées ($7_1$, $7_2$) rentrent en contact l'une avec l'autre.

4. Dispositif selon l'une des revendications 2 et 3, **caractérisé en ce que** ladite surface de contact (7a) est formée de deux plans disposés en dièdre, ayant une arête (7b) commune, ladite arête (7b) étant disposée de préférence en alignement avec une droite ($D_0$) en intersection avec ledit axe de rotation ($YY'$, $Y_1Y_1'$, $Y_2Y_2'$) dudit dispositif de fixation et articulation (6) correspondant.

5. Dispositif selon l'une des revendications 1 à 4, **caractérisé en ce que** les deux dites butées ($7_1$, $7_2$)

aux dites extrémités longitudinales en vis-à-vis de deux dits premier et deuxième manchons fixés l'un à l'autre, comprennent des éléments de blocage (7c, $7_1c$-$7_2c$), aptes à retenir lesdites butées bloquées l'une contre l'autre dès qu'elles rentrent en contact l'une avec l'autre au niveau d'une dite surface de contact en cas de dite rotation maximale ($\alpha$).

6. Dispositif selon l'une des revendications 1 à 5, **caractérisé en ce que** ledit dispositif de fixation et articulation (6) de deux premier et deuxième manchons comprend :

   - un premier élément de fixation et articulation ($6_1$) comprenant au moins une première pièce ($6_1a$, $6_1b$) définissant au moins une première face plane disposée selon un dit plan radial ($P_0$) sur la face supérieure dudit premier manchon à son extrémité longitudinale en vis-à-vis dudit deuxième manchon, ladite première pièce ($6_1a$, $6_1b$) comprenant un orifice circulaire (6a) au niveau de ladite première face plane, ledit orifice (6a) traversant transversalement au moins ladite première pièce dans une direction dudit axe de rotation ($YY'$, $Y_1Y_1'$, $Y_2Y_2'$) perpendiculaire aux dites directions longitudinales axiales ($XX'$, $X_1X_1'$, $X_2X_2'$) des deux premier et deuxième manchons, et
   - un deuxième élément de fixation et articulation ($6_2$) comprenant au moins une deuxième pièce ($6_2a$, $6_2b$) définissant au moins une deuxième face plane disposée selon un plan axial longitudinal ($P_0$) dudit deuxième manchon sur la face supérieure dudit deuxième manchon à son extrémité longitudinale en vis-à-vis dudit premier manchon, ladite deuxième pièce ($6_2a$-$6_2b$) comprenant un orifice circulaire (6a) au niveau de ladite deuxième face plane, ledit orifice (6a) traversant transversalement au moins ladite deuxième pièce dans la direction dudit axe de rotation ($YY'$, $Y_1Y_1'$, $Y_2Y_2'$) perpendiculaire, aux dites directions longitudinales axiales ($XX'$, $X_1X_1'$, $X_2X_2'$) des deux premier et deuxième manchons, et
   - une goupille ($6_3$) traversant transversalement au moins lesdites première et deuxième pièces ($6_1a$-$6_1b$, $6_2a$-$6_2b$) au niveau de leurs dits orifices (6a).

7. Dispositif selon la revendication précédente, **caractérisé en ce que** :

   - ledit premier élément de fixation et articulation ($6_1$) comprend au moins une dite première pièce perforée ($6_1a$, $6_1b$) définissant respectivement deux faces planes, parallèles, en vis-à-vis, dont une dite première face, lesdites deux faces planes délimitant un espace vide et étant disposées à une distance d'l'une de l'autre, et

- ledit deuxième élément de fixation et articulation ($6_2$) comprend au moins une deuxième pièce plate ($6_2$a-$6_2$b) comprenant deux faces planes opposées parallèles dont au moins une dite deuxième fa ce,

- ladite deuxième pièce plate ($6_2$a, $6_2$b) d'un premier manchon (5,N) étant fixée à et intercalée entre les deux dites faces planes en vis-à-vis dudit premier élément de fixation et articulation ($6_1$) d'un deuxième manchon (5, N+1), de telle sorte que les orifices (6a) des deux faces planes opposées de ladite deuxième pièce plate soient disposées en vis-à-vis des orifices respectivement des deux faces planes dudit premier élément de fixation et articulation ($6_1$).

**8.** Dispositif selon la revendication précédente, **caractérisé en ce que** ledit dispositif de fixation et articulation (6) comprend :

- un dit premier élément de fixation et articulation ($6_1$) à l'extrémité d'un dit premier manchon (5, N) comprenant deux dites premières pièces plates perforées ($6_1$a-$6_1$b) comprenant chacune deux faces planes opposées parallèles, les deux premières pièces plates étant disposées parallèlement côte à côte à une dite distance d l'une de l'autre, et

- un dit deuxième élément de fixation et articulation ($6_2$) à l'extrémité longitudinale d'un dit deuxième manchon (5, N+1) comprenant deux dites deuxièmes pièces plates perforées ($6_2$a-$6_2$b) comprenant chacune deux faces planes opposées parallèles, les deux deuxièmes pièces plates étant disposées parallèlement côte à côte à une dite distance d l'une de l'autre,

- une dite première pièce plate ($6_1$a) dudit premier manchon étant intercalée entre les deux dites deuxièmes pièces plates du deuxième manchon, et une dite deuxième pièce plate ($6_2$a) du deuxième manchon étant intercalée entre les deux dites premières pièces plates du premier manchon, et

- une même dite goupille ($6_3$) étant disposée à travers les orifices (6a) des deux dites premières pièces plates du premier manchon et deux dites deuxièmes pièces plates du deuxième manchon ainsi intercalées.

**9.** Dispositif selon l'une des revendications 1 à 8, **caractérisé en ce qu'**il comporte un dispositif de verrouillage (3) permettant de bloquer une dite ligne flexible (2) à l'intérieur dudit dispositif limiteur de courbure (1), empêchant ainsi leur mouvement relatif latérale et/ou longitudinal, le diamètre interne dudit manchon étant supérieur au diamètre externe de ladite ligne flexible.

**10.** Dispositif selon la revendication 9, **caractérisé en ce que** ledit dispositif de verrouillage (3) comporte au moins une sangle (3a), de préférence au moins deux sangles (3a), chaque sangle (3a) passant à travers deux orifices (3b) à la périphérie d'un manchon, de préférence un manchon central (5b) dudit organe tubulaire, les deux orifices (3b) étant disposés à proximité l'un de l'autre et positionnés à un même niveau dans la direction longitudinale axiale (XX') dudit manchon, chaque sangle (3a) encerclant, partiellement au moins, ladite ligne flexible (2) à l'intérieur dudit manchon et sortant à ses deux extrémités par respectivement les deux orifices (3b).

**11.** Dispositif selon l'une des revendications 1 à 10, **caractérisé en ce que** chaque dit manchon tubulaire (4) est composé de deux demi-manchons à sections semi-circulaire ($5_1$-$5_2$) fixés l'un à l'autre.

**12.** Dispositif selon l'une des revendications 1 à 11, **caractérisé en ce qu'**il comporte à une extrémité longitudinale sur sa face inférieure un treuil (9a) et un câble (9b) enroulé à une extrémité autour dudit treuil, l'autre extrémité du câble étant accrochée à un élément d'accrochage (9c) disposé à l'autre extrémité longitudinale dudit organe tubulaire sur sa face inférieure, permettant de tensionner ledit câble par actionnement dudit treuil et enroulement dudit câble autour dudit treuil et, ainsi, de rapprocher ainsi les deux extrémités longitudinales dudit organe tubulaire pour créer une dite courbure.

**13.** Installation de liaison fond-surface entre un équipement sous-marin, tel qu'une tête de puits sous-marine ou l'extrémité d'une conduite sous-marine reposant au fond de la mer (16), et un support flottant en surface (12), comprenant une ligne flexible sous-marine (2) dont la courbure est contrôlée par un dit dispositif limiteur de courbure (1) selon l'une des revendications 1 à 12, ladite ligne flexible étant enfilée à l'intérieur dudit organe tubulaire et ledit dispositif limiteur de courbure étant disposé à une profondeur intermédiaire entre le fond de la mer (16) et la surface (17).

**14.** Installation selon la revendication 13, **caractérisée en ce que** ladite liaison fond-surface comprend une tour hybride constituée d'une conduite flexible (13) s'étendant depuis un dit support flottant (12) jusqu'à l'extrémité supérieure d'une conduite rigide montante ou riser vertical (14) dont l'extrémité inférieure est reliée à un équipement (15) ou une extrémité d'une conduite sous-marine (18) reposant au fond de la mer (16), ladite installation comprenant en outre au moins un dispositif limiteur de courbure (1) accroché (10) à ladite colonne montante, de préférence comprenant au moins deux dispositifs limiteurs de courbure (1) accrochés à une même hauteur contre deux faces diamétralement opposées de ladite colonne montante.

15. Procédé de dépose d'une ligne sous-marine (2) d'une installation de liaison fond-surface selon la revendication 13 ou 14, depuis un navire de pose (20) en surface (17), la courbure de ladite ligne flexible sous-marine (2) étant contrôlée par un dit dispositif limiteur de courbure disposé à une profondeur intermédiaire entre le fond (16) de la mer et la surface (17), comprenant les étapes successives suivantes dans lesquelles :

     - 1/ledit dispositif limiteur de courbure (1) est disposé en position rectiligne sur le pont d'un navire de pose (20), et on déroule ladite ligne flexible (2) depuis une bobine (19) sur le pont du navire (20) en faisant passer la ligne flexible (2) à travers ledit dispositif limiteur de courbure en position fixe sur le pont du navire, et

     - 2/on accroche l'extrémité de ladite ligne flexible à un dit support flottant (12) en surface, et

     - 3/on continue de dérouler ladite ligne flexible à travers ledit limiteur de courbure, tout en éloignant le navire de pose (20) dudit support flottant (12), de manière à ce que ladite ligne flexible adopte une forme de chaînette plongeante (2a), et

     - 4/lorsqu'une longueur donnée ($L_0$) de conduite flexible a été déroulée en passant à travers ledit dispositif limiteur de courbure en position rectiligne, on verrouille ledit dispositif limiteur de courbure sur ladite ligne flexible à l'aide d'un dispositif de verrouillage (3), ledit dispositif limiteur de courbure étant alors entraîné avec ladite ligne flexible en cours de dépose, le dispositif limiteur de courbure étant en configuration de courbure inversée avec une faible courbure à concavité tournée vers le haut, et

     - 5/on approche le dispositif limiteur de courbure à une conduite rigide verticale (14) ou on le suspend à un flotteur en subsurface et on continue le déroulement de ladite ligne flexible de manière à ce que le limiteur de courbure adopte une dite courbure maximale ($R_0$) avec sa concavité tournée vers le bas, ledit limiteur de courbure délimitant ainsi deux portions de ligne flexible en forme de chaînette plongeante (2c) entre d'une part ledit support flottant (12) et ledit dispositif limiteur de courbure (1) et d'autre part ledit dispositif limiteur de courbure (1) et ledit navire de pose (20), et

     - 6/on continue la dépose de ladite ligne flexible jusqu'à ce que le point bas de tangence horizontale (i) de la chaînette plongeante (2c) de la deuxième portion de ligne flexible entre ledit dispositif limiteur de courbure (1) et le navire de pose en surface (20) atteigne le fond de la mer (16) et on continue alors la dépose sur le fond de la mer (16)de ladite ligne flexible en éloignant le navire de pose (20) du support flottant (12) tout en déroulant ladite ligne flexible depuis la bobine (19) sur le pont du navire de pose (20).

**Patentansprüche**

1. Krümmungsbegrenzungsvorrichtung (1), die ein rohrförmiges Organ bildet, das geeignet ist, eine geradlinige Position oder eine variable Krümmung unter Nichtzulassen eines Krümmungsradius, der kleiner als ein vorgegebener minimaler Krümmungsradius ($R_0$) ist, ein- bzw. anzunehmen und somit eine kontrollierte variable Krümmung oder das Nichtkrümmen einer innerhalb des rohrförmigen Organs hindurchgeführten flexiblen Leitung (2) zuzulassen, wobei das rohrförmige Organ eine Vielzahl von rohrförmigen Manschetten (5), die an ihren Längsenden aneinander angeordnet sind, vorzugsweise wenigstens 3 Manschetten, weiterhin vorzugsweise 3 bis 9 Manschetten umfasst, wobei die Manschetten (5) durch Befestigungs- und Drehgelenkvorrichtungen (6), die an der Oberseite einer jeden der Manschetten im Bereich ihrer Längsenden angeordnet sind, aneinander befestigt sind, wobei die Befestigungs- und Drehgelenkvorrichtungen (6) eine Rotation der Längsachse (XX', $X_1X_1$') einer ersten Manschette (5, N) gegenüber der Längsachse (XX', $X_2X_2$') einer zweiten Manschette (5, N+1), die an der ersten Manschette mittels der Befestigungs- und Gelenkvorrichtung (6) befestigt ist, zulassen, wobei die Rotation um eine Rotationsachse (YY', $Y_1Y_1$', $Y_2Y_2$'), die zu den beiden Längsachsen (XX', $X_1X_1$', $X_2X_2$') der ersten und zweiten Manschetten senkrecht verläuft, erfolgt, wobei vorzugsweise die beiden Rotationsachsen ($Y_1Y_1$', $Y_2Y_2$') der beiden Befestigungs- und Gelenkvorrichtungen (6), die an den beiden abgewandten Längsenden einer jeden Manschette angeordnet sind, in einem gleichen Abstand ($L_2$) von der Längsachse (XX', $X_1X_1$', $X_2X_2$') der Manschette angeordnet sind, wobei die Manschetten ferner an ihren beiden Längsenden jeweils zwei Anschläge mit ergänzender Form ($7_1$, $7_2$) umfassen, die an den Unterseiten der Manschetten in im Wesentlichen diametral gegenüberliegenden Positionen bezogen auf die Befestigungs- und Gelenkvorrichtungen (6) angeordnet sind, wobei die beiden endseitigen Stirnflächen ($7_1$a, $7_2$a) der beiden Anschläge ($7_1$, $7_2$) an den einander gegenüberliegenden Längsenden der ersten und der zweiten Manschette (5, N-N+1) voneinander beabstandet sind, wenn das rohrförmige Organ in geradliniger Position ist, und eine gemeinsame Kontaktfläche (7a) aufweisen, wenn die beiden Anschläge aufgrund der zugelassenen maximalen Rotation ($\alpha$) der beiden Unterseiten der beiden Manschetten zueinander, dank der Befestigungs- und Gelenkvorrichtungen (6), miteinander in Kontakt sind, wobei die Krümmungsbegrenzungsvorrichtung ferner eine umgekehrte Krümmung durch Hochschwenken der beiden Manschetten durch Annähern ihrer Oberseiten zulässt, **dadurch gekennzeichnet, dass** die Befestigungs- und Gelenkvorrichtungen (6) keinerlei Längs- oder Seitenausschlag der verschiedenen Manschetten (5) zueinander zulassen.

2. Vorrichtung nach Anspruch 1, **dadurch gekennzeichnet, dass** die Kontaktfläche (7a) der Anschläge ($7_1$, $7_2$) wenigstens eine Ebene umfasst.

3. Vorrichtung nach Anspruch 1 oder 2, **dadurch gekennzeichnet, dass** die Stirnseiten ($7_1$a, $7_2$a) von zwei Anschlägen dreidimensionale Flächen mit ergänzenden Formen, einer konkaven bzw. einer konvexen, umfassen, so dass die Kontaktfläche (7a) eine dreidimensionale Form aufweist, die jedwede seitliche Bewegung der beiden, ersten und zweiten, Manschetten (5, N-N+1) zueinander, in einer Richtung senkrecht zu einer der Längsachsen ($X_1X_1$', $X_2X_2$') der ersten und zweiten Manschetten verhindert und eine Wirkung eines Zentrierens der Längsachsen ($X_1X_1$', $X_2X_2$') der ersten und zweiten Manschetten im Wesentlichen in einer gleichen axialen Längsebene $P_o$ hat, wenn die beiden Anschläge ($7_1$, $7_2$) wieder miteinander in Kontakt gelangen.

4. Vorrichtung nach einem der Ansprüche 2 und 3, **dadurch gekennzeichnet, dass** die Kontaktfläche (7a) von zwei V-förmig angeordneten Ebenen gebildet ist, die eine gemeinsame Kante (7b) haben, wobei die Kante (7b) vorzugsweise mit einer Geraden ($D_o$), die sich mit der Rotationsachse (YY', $Y_1Y_1$', $Y_2Y_2$') der entsprechenden Befestigungs- und Gelenkvorrichtung (6) schneidet, fluchtend angeordnet ist.

5. Vorrichtung nach einem der Ansprüche 1 bis 4, **dadurch gekennzeichnet, dass** die beiden Anschläge ($7_1$, $7_2$) an den einander gegenüberliegenden Längsenden von zwei aneinander befestigten Manschetten, einer ersten und einer zweiten, Blockierelemente (7c, $7_1$c-$7_2$c) umfassen, die geeignet sind, die Anschläge gegeneinander blockiert zu halten, sobald sie im Bereich einer Kontaktfläche, im Fall einer maximalen Rotation ($\alpha$), wieder miteinander in Kontakt gelangen.

6. Vorrichtung nach einem der Ansprüche 1 bis 5, **dadurch gekennzeichnet, dass** die Befestigungs- und Gelenkvorrichtung (6) von zwei Manschetten, einer ersten und einer zweiten, umfasst:

   - ein erstes Befestigungs- und Gelenkelement ($6_1$) mit wenigstens einem ersten Teil ($6_1$a, $6_1$b),

das wenigstens eine erste ebene Seite, die entlang einer Radialebene ($P_o$) auf der Oberseite der ersten Manschette an ihrem Längsende gegenüber der zweiten Manschette angeordnet ist, definiert, wobei das erste Teil ($6_1$a, $6_1$b) eine kreisförmige Öffnung (6a) im Bereich der ersten ebenen Seite umfasst, wobei die Öffnung (6a) wenigstens das erste Teil in einer Richtung der Rotationsachse (YY', $Y_1Y_1$', $Y_2Y_2$') senkrecht zu den axialen Längsrichtungen (XX', $X_1X_1$', $X_2X_2$') der beiden, ersten und zweiten, Manschetten, quer durchgreift, und
   - ein zweites Befestigungs- und Gelenkelement ($6_2$) mit wenigstens einem zweiten Teil ($6_2$a, $6_2$b), das wenigstens eine zweite ebene Seite, die entlang einer axialen Längsebene ($P_o$) der zweiten Manschette auf der Oberseite der zweiten Manschette an ihrem Längsende gegenüber der ersten Manschette angeordnet ist, definiert, wobei das zweite Teil ($6_2$a-$6_2$b) eine kreisförmige Öffnung (6a) im Bereich der zweiten ebenen Seite umfasst, wobei die Öffnung (6a) wenigstens das zweite Teil in der Richtung der Rotationsachse (YY', $Y_1Y_1$', $Y_2Y_2$') senkrecht zu den axialen Längsrichtungen (XX', $X_1X_1$', $X_2X_2$') der beiden, ersten und zweiten, Manschetten, quer durchgreift, und
   - einen Stift ($6_3$), der wenigstens das erste und das zweite Teil ($6_1$a-$61_b$, $6_2$a-$6_2$b) im Bereich ihrer Öffnungen (6a) quer durchgreift.

7. Vorrichtung nach dem vorhergehenden Anspruch, **dadurch gekennzeichnet, dass**:

   - das erste Befestigungs- und Gelenkelement ($6_1$) wenigstens ein erstes durchlochtes Teil ($6_1$a, $6_1$b) umfasst, das jeweils zwei parallele, einander gegenüberliegende ebene Seiten, darunter eine erste Seite, definiert, wobei die beiden ebenen Seiten einen Leerraum begrenzen und in einem Abstand d voneinander angeordnet sind, und
   - das zweite Befestigungs- und Gelenkelement ($6_2$) wenigstens ein zweites flaches Teil ($6_2$a-$6_2$b) umfasst, das zwei entgegengesetzte, parallele ebene Seiten, darunter wenigstens eine zweite Seite, umfasst,
   - wobei das zweite flache Teil ($6_2$a, $6_2$b) einer ersten Manschette (5, N) an den beiden gegenüberliegenden ebenen Seiten des ersten Befestigungs- und Gelenkelements ($6_1$) einer zweiten Manschette (5, N+1) derart befestigt und zwischen ihnen eingefügt ist, dass die Öffnungen (6a) der beiden entgegengesetzten ebenen Seiten des zweiten flachen Teils gegenüber den Öffnungen jeweils der beiden ebenen Seiten des ersten Befestigungs- und Gelenkelements ($6_1$) angeordnet sind.

8. Vorrichtung nach dem vorhergehenden Anspruch, **dadurch gekennzeichnet, dass** die Befestigungs- und Gelenkvorrichtung (6) umfasst:

   - ein erstes Befestigungs- und Gelenkelement ($6_1$) an dem Ende einer ersten Manschette (5, N), das zwei erste durchbohrte, flache Teile ($6_1$a-$6_1$b) umfasst, die jeweils zwei entgegengesetzte, parallele ebene Seiten umfassen, wobei die beiden ersten flachen Teile parallel nebeneinander in einem Abstand d voneinander angeordnet sind, und
   - ein zweites Befestigungs- und Gelenkelement ($6_2$) an dem Längsende einer zweiten Manschette (5, N+1), das zwei zweite durchbohrte, flache Teile ($6_2$a-$6_2$b) umfasst, die jeweils zwei entgegengesetzte, parallele ebene Seiten umfassen, wobei die beiden zweiten flachen Teile parallel nebeneinander in einem Abstand d voneinander angeordnet sind,
   - wobei ein erstes flaches Teil ($6_1$a) der ersten Manschette zwischen den beiden zweiten flachen Teilen der zweiten Manschette eingefügt ist und ein zweites flaches Teil ($6_2$a) der zweiten Manschette zwischen den beiden ersten flachen Teilen der ersten Manschette eingefügt ist, und
   - wobei ein gleicher Stift ($6_3$) durch die Öffnungen (6a) der so eingefügten beiden ersten flachen Teile der ersten Manschette und beiden zweiten flachen Teile der zweiten Manschette hindurch angeordnet ist.

9. Vorrichtung nach einem der Ansprüche 1 bis 8, **dadurch gekennzeichnet, dass** sie eine Verriegelungsvorrichtung (3) umfasst, die ermöglicht, eine flexible Leitung (2) innerhalb der Krümmungsbegrenzungsvorrichtung (1) zu blockieren, wodurch ihre Seiten- und/oder Längsrelativbewegung verhindert wird, wobei der Innendurchmesser der Manschette größer als der Außendurchmesser der flexiblen Leitung ist.

10. Vorrichtung nach Anspruch 9, **dadurch gekennzeichnet, dass** die Verriegelungsvorrichtung (3) wenigstens einen Gurt (3a), vorzugsweise wenigstens zwei Gurte (3a) umfasst, wobei jeder Gurt (3a) durch zwei Öffnungen (3b) am Umfang einer Manschette, vorzugsweise einer mittleren Manschette (5b) des rohrförmigen Organs läuft, wobei die beiden Öffnungen (3b) in der Nähe voneinander angeordnet und auf einer gleichen Höhe in der axialen Längsrichtung (XX') der Manschette positioniert sind, wobei jeder Gurt (3a) die flexible Leitung (2) innerhalb der Manschette wenigstens teilweise umgreift und an ihren beiden Enden jeweils über die beiden Öffnungen (3b) austritt.

11. Vorrichtung nach einem der Ansprüche 1 bis 10, **da-**

**durch gekennzeichnet, dass** jede rohrförmige Manschette (5) aus zwei Halbmanschetten mit halbkreisförmigen Querschnitten ($5_1$-$5_2$), die aneinander befestigt sind, besteht.

12. Vorrichtung nach einem der Ansprüche 1 bis 11, **dadurch gekennzeichnet, dass** sie an einem Längsende an ihrer Unterseite eine Winde (9a) und ein an einem Ende um die Winde gewickeltes Seil (9b) umfasst, wobei das andere Ende des Seils an einem Einhängelement (9c) eingehängt ist, das an dem anderen Längsende des rohrförmigen Organs an seiner Unterseite angeordnet ist, das ermöglicht, das Seil durch Betätigen der Winde und Aufwickeln des Seils um die Winde zu spannen und somit die beiden Längsenden des rohrförmigen Organs einander zu nähern, um eine Krümmung zu erzeugen.

13. Anlage zur Grund-Oberflächen-Verbindung zwischen einer Unterwassereinrichtung, wie einem Unterwasserbohrlochkopf oder dem Ende einer auf dem Meeresgrund (16) aufliegenden Unterwasserleitung, und einem an der Oberfläche schwimmenden Träger (12), umfassend eine flexible Unterwasserleitung (2), deren Krümmung durch eine Krümmungsbegrenzungsvorrichtung (1) nach einem der Ansprüche 1 bis 12 gesteuert wird, wobei die flexible Leitung innerhalb des rohrförmigen Organs hindurchgeführt ist und wobei die Krümmungsbegrenzungsvorrichtung in einer Zwischentiefe zwischen dem Meeresgrund (16) und der Oberfläche (17) angeordnet ist.

14. Anlage nach Anspruch 13, **dadurch gekennzeichnet, dass** die Grund-Oberflächen-Verbindung einen Hybridturm umfasst, der aus einer flexiblen Leitung (13), welche sich von einem schwimmenden Träger (12) bis zum oberen Ende einer starren Steigleitung oder eines vertikalen Steigrohrs (14) erstreckt, deren/dessen unteres Ende mit einer Einrichtung (15) oder einem Ende einer auf dem Meeresgrund (16) aufliegenden Unterwasserleitung (18) verbunden ist, besteht, wobei die Anlage ferner wenigstens eine Krümmungsbegrenzungsvorrichtung (1), die an dem Steigrohr befestigt ist (10), umfasst, vorzugsweise wenigstens zwei Krümmungsbegrenzungsvorrichtungen (1), die in einer gleichen Höhe an zwei diametral gegenüberliegenden Seiten des Steigrohrs befestigt sind, umfasst.

15. Verfahren zum Verlegen einer Unterwasserleitung (2) einer Anlage zur Grund-Oberflächen-Verbindung nach Anspruch 13 oder 14, von einem Verlegeschiff (20) an der Oberfläche (17) aus, wobei die Krümmung der flexiblen Unterwasserleitung (2) durch eine Krümmungsbegrenzungsvorrichtung, die in einer Zwischentiefe zwischen dem Meeresgrund (16) und der Oberfläche (17) angeordnet ist, gesteuert wird, umfassend die folgenden aufeinanderfolgenden Schritte, bei denen:

- 1/ die Krümmungsbegrenzungsvorrichtung (1) in geradliniger Position auf der Brücke eines Verlegeschiffes (20) angeordnet ist, und die flexible Leitung (2) von einer Spule (19) auf der Brücke des Schiffes (20) abgewickelt wird und man dabei die flexible Leitung (2) durch die Krümmungsbegrenzungsvorrichtung in fester Position auf der Brücke des Schiffes laufen lässt, und

- 2/ das Ende der flexiblen Leitung an einem schwimmenden Träger (12) an der Oberfläche befestigt wird, und

- 3/ die flexible Leitung durch den Krümmungsbegrenzer hindurch weiter abgewickelt wird und gleichzeitig das Verlegeschiff (20) von dem schwimmenden Träger (12) entfernt wird, so dass die flexible Leitung eine Form einer eintauchenden Kettenlinie (2a) annimmt, und,

- 4/ wenn eine vorgegebene Länge ($L_0$) an flexibler Leitung unter Durchlaufen der Krümmungsbegrenzungsvorrichtung in geradliniger Position abgewickelt worden ist, die Krümmungsbegrenzungsvorrichtung an der flexiblen Leitung mit Hilfe einer Verriegelungsvorrichtung (3) verriegelt wird, wobei die Krümmungsbegrenzungsvorrichtung dann mit der flexiblen Leitung im Laufe des Ablegens mitgenommen wird, wobei die Krümmungsbegrenzungsvorrichtung sich in umgekehrter Krümmungsausführung, mit einer leichten Krümmung mit nach oben gewandter Konkavität befindet, und

- 5/ die Krümmungsbegrenzungsvorrichtung einer starren Senkrechtleitung (14) genähert wird oder sie an einem Schwimmer nahe der Oberfläche aufgehängt wird und das Abwickeln der flexiblen Leitung fortgesetzt wird, so dass der Krümmungsbegrenzer eine maximale Krümmung ($R_0$), deren Konkavität nach unten gewandt ist, annimmt, wodurch der Krümmungsbegrenzer zwei flexible Leitungsabschnitte in Form einer eintauchenden Kettenline (2c) zwischen einerseits dem schwimmenden Träger (12) und der Krümmungsbegrenzungsvorrichtung (1) sowie andererseits der Krümmungsbegrenzungsvorrichtung (1) und dem Verlegeschiff (20) begrenzt, und

- 6/ das Ablegen der flexiblen Leitung soweit fortgesetzt wird, bis der untere Horizontalberührungspunkt (i) der eintauchenden Kettenlinie (2c) des zweiten flexiblen Leitungsabschnitts zwischen der Krümmungsbegrenzungsvorrichtung (1) und dem Verlegeschiff an der Oberfläche (20) den Meeresgrund (16) erreicht, und dann das Ablegen der flexiblen Leitung auf dem Meeresgrund (16) unter Entfernen des Verlegeschiffes (20) vom dem schwimmenden Träger (12) und gleichzeitigem Abwickeln der flexiblen Leitung von der Spule (19) auf der Brücke des Verlegeschiffs (20) fortgesetzt wird.

**Claims**

1. A curvature limiter device (1) forming a tubular member suitable for adopting a rectilinear position or variable curvature while preventing a radius of curvature that is less than a given minimum radius of curvature ($R_0$) and thus authorizing a flexible line (2) threaded inside said tubular member to take up a controlled variable degree of curvature or no curvature, said tubular member comprising a plurality of tubular sleeves (5) arranged end-to-end at their longitudinal ends, preferably at least three sleeves, more preferably three to nine sleeves, said sleeves (5) being fastened to one another by fastener-and-hinge pivot devices (6) arranged on the top face of each of said sleeves, at their longitudinal ends, said fastener-and-hinge pivot devices (6) allowing the longitudinal axis XX', $X_1X_1'$ of a first sleeve (5, N) to pivot relative to the longitudinal axis XX', $X_2X_2'$ of a second sleeve (5, N+1) fastened to said first sleeve by means of said fastener-and-hinge device (6), said pivoting taking place about a hinge axis YY', $Y_1Y_1'$, $Y_2Y_2'$ perpendicular to said two longitudinal axes XX', $X_1X_1'$, $X_2X_2'$ of said first and second sleeves, the two hinge axes YY', $Y_1Y_1'$, $Y_2Y_2'$ of the two fastener-and-hinge devices (6) arranged at the two opposite longitudinal ends of each sleeve preferably being arranged at the same distance $L_2$ from the longitudinal axis XX', $X_1X_1'$, $X_2X_2'$ of said sleeve, said sleeves further including at their two longitudinal ends respective abutments of complementary shape ($7_1$, $7_2$) arranged against the bottom faces of said sleeves in positions that are substantially diametrically opposite from said fastener-and-hinge devices (6), the two end faces ($7_1$a, $7_2$a) of the two abutments ($7_1$, $7_2$) at the facing longitudinal ends of said first and second sleeves (5, N, N+1) being spaced apart from each other when said tubular member is in a rectilinear position, and presenting a common contact surface (7a) when said two abutments are in contact with each other as a result of maximum authorized pivoting ($\alpha$) of the two bottom faces of said two sleeves towards each other by means of said fastener-and-hinge devices (6), said curvature limiter device allowing an inverse curvature by upward pivoting of the two sleeves by moving their top faces towards each other, **characterized in that** said fastener-and-hinge pivot devices (6) do not allow any longitudinal or lateral movement between the various sleeves (5) relative to each other.

2. A device according to claim 1, **characterized in that** said contact surface (7a) between said abutments $(7_1, 7_2)$ comprises at least one plane.

3. A device according to claim 1 or claim 2, **characterized in that** said end faces $(7_1a, 7_2a)$ of the two abutments comprise three-dimensional surfaces of complementary shapes, respectively of concave shape and of convex shape, such that said contact surface (7a) presents a three-dimensional shape preventing any lateral movement between said first and second sleeves (5, N, N+1) relative to each other in a direction perpendicular to either of said longitudinal axes $X_1X_1'$, $X_2X_2'$ of said first and second sleeves, and having an effect of centering the longitudinal axes $X_1X_1'$, $X_2X_2'$ of said first and second sleeves substantially in a common longitudinal axial plane $P_0$ when said two abutments $(7_1, 7_2)$ come into contact with each other.

4. A device according to claim 2 or claim 3, **characterized in that** said contact surface (7a) is made up of two planes forming a dihedral angle with a common ridge (7b), said ridge (7b) preferably being arranged in alignment with a straight line $D_0$ intersecting said hinge axis YY', $Y_1Y_1'$, $Y_2Y_2'$ of said corresponding fastener-and-hinge device (6).

5. A device according to any one of claims 1 to 4, **characterized in that** said two abutments $(7_1, 7_2)$ at said facing longitudinal ends of said first and second fastened-together sleeves include latch elements (7c, $7_1c-7_2c$) suitable for holding said abutments latched one against the other as soon as they come into contact with each other via a said contact surface in the event of said maximum pivoting $\alpha$.

6. A device according to any one of claims 1 to 5, **characterized in that** said fastener-and-hinge device (6) of the first and second sleeves comprises:

· a first fastener-and-hinge element $(6_1)$ comprising at least one first part $(6_1a, 6_1b)$ defining at least one first plane face arranged in a said radial plane $P_0$ on the top face of said first sleeve at its longitudinal end facing said second sleeve, said first part $(6_1a, 6_1b)$ having a circular orifice (6a) in said first plane face, said orifice (6a) passing transversely at least through said first part in a direction of said hinge axis YY', $Y_1Y_1'$, $Y_2Y_2'$ perpendicular to said axial longitudinal directions XX', $X_1X_1'$, $X_2X_2'$ of the first and second sleeves; and
· a second fastener-and-hinge element $(6_2)$ comprising at least one second part $(6_2a, 6_2b)$ defining at least one second plane face arranged in a longitudinal axial plane $P_0$ of said second sleeve on the top face of said second sleeve at its longitudinal end facing said first sleeve, said

second part $(6_2a, 6_2b)$ having a circular orifice (6a) in said second plane face, said orifice (6a) passing transversely at least through said second part in the direction of said hinge axis YY', $Y_1Y_1'$, $Y_2Y_2'$ perpendicular to said axial longitudinal directions XX', $X_1X_1'$, $X_2X_2'$ of the first and second sleeves; and
- a pin $(6_3)$ passing transversely at least through said first and second parts $(6_1a-6_1b, 6_2a-6_2b)$ via their said orifices (6a).

7. A device according to the preceding claim, **characterized in that**:

· said first fastener-and-hinge element $(6_1)$ comprises at least one said first perforated part $(6_1a, 6_1b)$ respectively defining two facing parallel plane faces, including a said first face, said two plane faces defining an empty space and being arranged apart from each other at a distance d; and
· said second fastener-and-hinge element $(6_2)$ comprises at least one second flat part $(6_2a-6_2b)$ having two parallel opposite plane faces including at least a said second face;
said second flat part $(6_2a-6_2b)$ of a first sleeve (5, N) being fastened to and interposed between the two said facing plane faces of said first fastener-and-hinge element $(6_1)$ of a second sleeve (5, N+1) in such a manner that the orifices (6a) of the two opposite plane faces of said second flat part are arranged facing respective orifices in the two plane faces of said first fastener-and-hinge element $(6_1)$.

8. A device according to the preceding claim, **characterized in that** said fastener-and-hinge device (6) comprises:

· a said first fastener-and-hinge element $(6_1)$ at the end of a said first sleeve (5, N) having two said first perforated flat parts $(6_1a-6_1b)$ each having two parallel opposite plane faces, the two first flat parts being arranged side by side and parallel at a said distance $\underline{d}$ apart from each other; and
· a said second fastener-and-hinge element $(6_2)$ at the longitudinal end of a said second sleeve (5, N+1) having two said second perforated flat parts $(6_2a-6_2b)$ each having two parallel opposite plane faces, the two second flat parts being arranged side by side and parallel at a said distance $\underline{d}$ apart from each other;
a said first flat part $(6_1a)$ of said first sleeve being interposed between said two second flat parts of the second sleeve, and a said second flat part $(6_2a)$ of the second sleeve being interposed between said two first flat parts of the first sleeve;

and

a common said pin ($6_3$) being arranged through the orifices (6a) of said two first flat parts of the first sleeve and of said two second flat parts of the second sleeve as interposed in this way.

9. A device according to any one of claims 1 to 8, **characterized in that** it includes a locking device (3) enabling a said flexible line (2) to be locked inside said curvature limiter device (1), thereby preventing them from moving relative to each other laterally and/or longitudinally, the inside diameter of said sleeve being greater than the outside diameter of said flexible line.

10. A device according to claim 9, **characterized in that** said locking device (3) comprises at least one strap (3a), preferably at least two straps (3a), each strap (3a) passing through two orifices (3b) in the periphery of a sleeve, preferably a central sleeve (5b) of said tubular member, the two orifices (3b) being arranged close to each other and positioned at the same level in the axial longitudinal direction XX' of said sleeve, each strap (3a) passing around at least part of said flexible line (2) inside said sleeve and exiting at its two ends via the two orifices (3b) respectively.

11. A device according to any one of claims 1 to 10, **characterized in that** each said tubular sleeve (4) is made up of two half-sleeves of semicircular section ($5_1$-$5_2$) that are fastened to each other.

12. A device according to any one of claims 1 to 11, **characterized in that** it includes a winch (9a) on its bottom face at one longitudinal end and a cable (9b) wound at one end on said winch, the other end of the cable being attached to an attachment element (9b) arranged at the other longitudinal end of said tubular member on its bottom face, thereby enabling said cable to be tensioned by actuating said winch to wind said cable around said winch and thus move the two longitudinal ends of said tubular member towards each other in order to create a said curvature.

13. A bottom-to-surface connection installation between undersea equipment such as an undersea well head or the end of an undersea pipe resting on the sea bottom (16), and a support (12) floating on the surface, the installation comprising an undersea flexible line (2) of curvature that is controlled by a said curvature limiter device (1) according to any one of claims 1 to 12, said flexible line being threaded inside said tubular member and said curvature limiter device being arranged at an intermediate depth between the sea bottom (16) and the surface (17).

14. An installation according to claim 13, **characterized in that** said bottom-to-surface connection comprises a hybrid tower constituted by a flexible pipe (13) extending from a said floating support (12) to the top end of a rigid riser column or vertical riser (14) having its bottom end connected to undersea equipment (15) or to one end of an undersea pipe (18) resting on the sea bottom (16), said installation further comprising at least one curvature limiter device (1) attached (10) to said riser column, preferably including at least two curvature limiter devices (1) attached at the same depth to two diametrically opposite faces of said riser column.

15. A method of laying an undersea line (2) of a bottom-to-surface connection installation according to claim 13 or claim 14, from a laying ship (20) on the surface (17), the curvature of said undersea flexible line (2) being controlled by a said curvature limiter device arranged at an intermediate depth between the sea bottom (16) and the surface (17), the method comprising the following successive steps:

1) arranging said curvature limiter device (1) in a rectilinear position on the deck of a laying ship (20) and unwinding said flexible line (2) from a spool (19) on the deck of the ship (20) while causing the flexible line (2) to pass through said curvature limiter device in a fixed position on the deck of the ship;

2) attaching the end of said flexible line to a said floating support (12) on the surface;

3) continuing to unwind said flexible line through said curvature limiter while moving the laying ship (20) away from said floating support (12) so that said flexible line adopts a dipping catenary (2a); and

4) when a given length $L_0$ of flexible pipe has been unwound by passing through said curvature limiter device in its rectilinear position, locking said curvature limiter device on said flexible line with the help of a locking device (3), said curvature limiter device then being entrained with said flexible line while it is being laid, the curvature limiter device being in an inverted curvature configuration with a small amount of curvature and with its concave sides facing upwards;

5) bringing the curvature limiter device towards a vertical rigid column (14) or suspending it from a subsurface float and continuing to unwind said flexible line in such a manner that the curvature limiter adopts a said maximum curvature $R_0$ with its concave side facing downwards, said curvature limiter thus defining two portions of flexible line in dipping catenary shape (2c) firstly between said floating support (12) and said curvature limiter device (1), and secondly between said curvature limiter device (1) and said laying ship (20); and

6) continuing to lay said flexible line until the low point (i) that is tangential to the horizontal of the dipping catenary (2c) of the second portion of the flexible line between said curvature limiter device (1) and the laying ship (20) on the surface reaches the sea bottom (16) and then continuing to lay said flexible line on the sea bottom (16) while moving the laying ship (20) away from the floating support (12) and while unwinding said flexible line from the spool (19) on the deck of the laying ship (20).

EP 2 671 010 B1

4a
6
4
4
4a

4a1 5 61 63 62 61 63 62 5 61 3 4b1 3 62 5 61 5 62 5 4a1

X ————————————————————————————————————— X'  **FIG.1A**

1

71 72 4b2 4b L3

4a
4
4
4a

4a1 5 61 63 62 61 63 62 5 61 3 4b1 3 62 5 61 5 62 5 4a1

X ————————————————————————————————————— X'  **FIG.1B**

1
2

71 72 4b2 4b L3

α α α
4b1
1
4
61
α
6 62
α
5
63
61
3 4b2 3
72
71
5
4a
5
α
4a1
R0
α

**FIG.1C**

FIG.2

FIG.3A

FIG.3B

FIG.4A

FIG.4B

FIG.4C

FIG.5

FIG.6A

FIG.6B

FIG.7A

FIG.7B

FIG.7C

FIG.8

EP 2 671 010 B1

FIG.9A

FIG.9B

FIG.9C

FIG.10A

FIG.10B

FIG.10C

**FIG.11A**

**FIG.11B**

**FIG.12A**

**FIG.12B**

FIG.13A

FIG.13B

33

**EP 2 671 010 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009138609 A
- WO 0049267 A
- FR 0958096
- FR 2889557
- US 20100228295 A
- GB 2334048 A
- WO 2005078325 A